# EUROPEAN PATENT APPLICATION

(11) **EP 4 209 984 A1**
(43) Date of publication of application: **12.07.2023**
(21) Application number: 20952332.3
(22) Date of filing: 31.12.2020
(51) Int. Cl.: G06Q 30/00

(54) **INTERNET-BASED COMMODITY RELATED INFORMATION GENERATION METHOD AND APPARATUS**

(30) Priority: 01.09.2020 CN 202010901558
(71) Applicant: Han, Shaojie, Guangzhou, Guangdong 510623 (CN)
(72) Inventor: HAN, Shaojie, Guangzhou, Guangdong 510623 (CN); HAN, Bo, Guangzhou, Guangdong 510623 (CN)
(74) Representative: Petraz, Gilberto Luigi
(86) International application number: PCT/CN2020/141879
(87) International publication number: WO 2022/048091

(57) **Abstract**

The present invention discloses an Internet-based commodity-related information generation method and apparatus. The method includes: after a verification request triggered by an enterprise is acquired, verifying information to be verified; after the verification succeeds, generating commodity-related information according to acquired commodity inspection data and commodity commitment data, wherein the commodity-related information includes an evaluation result corresponding to the enterprise (such as a benchmarking evaluation result), and/or, a code graph identification corresponding to the enterprise, and/or, one piece of or a combination of more pieces of comparison certificate information of the enterprise, commitment information of the enterprise and verification information of the enterprise; and the code graph identification corresponding to the enterprise is used for accessing one piece or a combination of more pieces of the commodity-related information except code graph information.

## Description

### Field of the invention

The present invention relates to the technical field of Internets, in particular to an Internet-based commodity-related information generation method and apparatus.

### Background of the invention

With the rapid development of Internet, consumers have more and more diversified ways to buy commodities. For example, consumers can buy commodities in physical stores or buy commodities online through e-commerce platforms. Since online purchase is not restrained by locations, time and other conditions, online purchase for commodities is more and more popular, so that consumers can choose and buy items they need anytime and anywhere. Therefore, e-commerce has stepped into a new stage of development, and will become an important transaction way between enterprises and between enterprises and individuals. At present, three major business models which are related to e-commerce and widely used are B2C, B2B and C2C.

However, practice has found that there are multiple manufacturers producing the same kind of commodities (such as daily necessities and furniture items). At present, consumers mainly choose commodities on the basis of advertisements placed by manufacturers for the commodities or brief introductions of the commodities. The quality of commodities produced in different manufacturers varies, and the advertisements or the brief introductions of the commodities have false propaganda, which makes it difficult for consumers to choose suitable products, thereby reducing consumers' right to know about the purchased commodities; and at the same time, this makes those enterprises who are committed to producing high-quality and good-price commodities confused. It can be seen that it is particularly important to provide a commodity-related information generation method, so as to generate objective, true and effective commodity-related information for consumers to know, refer and identify good and bad commodities and to optimize the market environment.

### Summary of invention

The technical problem to be solved by the present invention is to provide an Internet-based commodity-related information generation method and apparatus, which can provide an intelligent commodity-related information generation mode, so as to generate true, effective and intuitive commodity-related information according to verified and benchmarked objective data of a commodity for the reference of customers or purchasers, thus achieving best selection of commodities and production of high-quality and good-price commodities.

In order to solve the above technical problems, a first aspect of the present invention discloses an Internet-based commodity-related information generation method. The method is applied to an information generation platform, and the method includes:
acquiring, by the information generation platform, a verification request triggered by a certain enterprise, wherein the verification request includes information to be verified corresponding to the enterprise, and the verification request is used for asking the information generation platform to verify the information to be verified; the enterprise is any enterprise that requires generation of commodity-related information or any enterprise that requires generation of commodity-related information and is registered in the information generation platform;
verifying, by the information generation platform, the information to be verified; when the verification of the information to be verified succeeds, acquiring target commodity commitment data corresponding to the enterprise, and acquiring target commodity inspection data corresponding to the enterprise; and
generating, by the information generation platform, commodity-related information matched with the enterprise according to the target commodity inspection data and the target commodity commitment data;
wherein the commodity-related information includes an evaluation result corresponding to the enterprise, and/or, a code graph identification corresponding to the enterprise, and/or, one piece or a combination of more pieces of comparison certificate information of the enterprise, commitment information of the enterprise and verification information of the enterprise; the code graph identification corresponding to the enterprise is used for accessing one or a combination of more of the evaluation result corresponding to the enterprise, the comparison certificate information of the enterprise, the commitment information of the enterprise and the verification information of the enterprise.

A second aspect of the present invention discloses an Internet-based commodity-related information generation apparatus. The apparatus is applied to an information generation platform, and the apparatus includes:
a first acquisition module, configured to acquire a verification request triggered by a certain enterprise, wherein the verification request includes information to be verified corresponding to the enterprise, and the verification request is used for asking the information generation platform to verify the information to be verified; the enterprise is any enterprise that requires generation of commodity-related information or any enterprise that requires generation of commodity-related information and is registered in the information generation platform;
a verification module, configured to verify the information to be verified;
a second acquisition module, configured to acquire target commodity commitment data corresponding to the enterprise when the verification of the information to be verified by the verification module succeeds;
a third acquisition module, configured to acquire target commodity inspection data corresponding to the enterprise when the verification of the information to be verified by the verification module succeeds; and
an information generation module, configured to generate commodity-related information matched with the enterprise according to the target commodity inspection data and the target commodity commitment data;
wherein the commodity-related information includes an evaluation result corresponding to the enterprise, and/or, a code graph identification corresponding to the enterprise, and/or, one piece or a combination of more pieces of comparison certificate information of the enterprise, commitment information of the enterprise and verification information of the enterprise; the code graph identification corresponding to the enterprise is used for accessing one or a combination of more of the evaluation result corresponding to the enterprise, the comparison certificate information of the enterprise, the commitment information of the enterprise and the verification information of the enterprise.

A third aspect of the present invention discloses another Internet-based commodity-related information generation apparatus. The apparatus is applied to an information generation platform, and the apparatus includes:
a memory which stores executable program codes;
a processor which is coupled to the memory;
the processor calls the executable program codes stored in the memory to execute part or all of the steps in the Internet-based commodity-related information generation method disclosed in the first aspect of the embodiment of the present invention.

A fourth aspect of the present invention discloses a computer storage medium. The computer storage medium stores computer instructions; and the computer instructions are used for, when called, executing part or all of the steps in the Internet-based commodity-related information generation method disclosed in the first aspect of the embodiment of the present invention.

Compared with the prior art, the embodiments of the present invention have the following beneficial effects.

In the embodiments of the present invention, after the verification request triggered by the enterprise is acquired, the information to be verified is verified; and after the verification succeeds, the commodity-related information is generated according to the acquired commodity inspection data and commodity commitment data. The commodity-related information includes the evaluation result corresponding to the enterprise, and/or, the code graph identification corresponding to the enterprise, and/or, one piece of or a combination of more pieces of the comparison certificate information of the enterprise, the commitment information of the enterprise and the verification information of the enterprise. The code graph identification corresponding to the enterprise is used for accessing one piece or a combination of more pieces of the commodity-related information except code graph information. Therefore, the present invention provides an intelligent commodity-related information generation mode, so as to generate true, effective and intuitive commodity-related information according to verified and benchmarked objective data of a commodity for the reference of customers or purchasers, thus achieving best choice of commodities and manufacturers' production of high-quality and good-price commodities.

### Brief description of the drawings

In order to explain the technical solutions of the embodiments of the present invention more clearly, the following will briefly introduce the accompanying drawings used in the description of the embodiments. Apparently, the accompanying drawings in the following description are only some embodiments of the present invention. Those of ordinary skill in the art can obtain other accompanying drawings based on these accompanying drawings without creative work.
Fig. 1 is a schematic flow chart of an Internet-based commodity-related information generation method disclosed by an embodiment of the present invention.
Fig. 2 is a schematic flow chart of another Internet-based commodity-related information generation method disclosed by an embodiment of the present invention.
Fig. 3 is a schematic structural diagram of an Internet-based commodity-related information generation apparatus disclosed by an embodiment of the present invention.
Fig. 4 is a schematic structural diagram of another Internet-based commodity-related information generation apparatus disclosed by an embodiment of the present invention.
Fig. 5 is a schematic structural diagram of yet another Internet-based commodity-related information generation apparatus disclosed by an embodiment of the present invention.

### Detailed description of illustrated embodiments

In order to make those skilled in the art better understand the solutions of the present invention, the technical solutions in the embodiments of the present invention will be described clearly and completely below in combination with the accompanying drawings in the embodiments of the present invention. Obviously, the embodiments described herein are only part of the embodiments of the present invention, not all the embodiments. Based on the embodiments in the present invention, all other embodiments obtained by those of ordinary skill in the art without doing creative work shall fall within the protection scope of the present invention.

The terms "first", "second", etc. in the specification and claims of the present invention and the above accompanying drawings are used to distinguish similar objects, and are not intended to describe a specific sequence. In addition, the terms "include", "have" and any of their variations mean covering and non-exclusive inclusion. For example, processes, methods, apparatuses, products or terminals which include a series of steps or units are not limited to the listed steps or units, but selectively further include steps or units which are not listed, or selectively further include other steps or units which are inherent to these processes, methods, products or terminals.

The "embodiment" mentioned herein means that specific features, structures or characteristics described in combination with the embodiments may be included in at least one embodiment of the present invention. This phrase appearing at each position in the description does not refer to the same embodiment, and is not an independent or candidate embodiment mutually exclusive with other embodiments. Those skilled in the art can explicitly and implicitly understand that the embodiments described herein may be combined with other embodiments.

The present invention discloses an Internet-based commodity-related information generation method and apparatus, and provides an intelligent commodity-related information generation mode, so as to generate true, effective and intuitive commodity-related information according to verified and benchmarked objective data of a commodity for the reference of customers or purchasers, thus achieving best selection of commodities and production of high-quality and good-price commodities. Detailed descriptions are respectively made below.

### Embodiment I

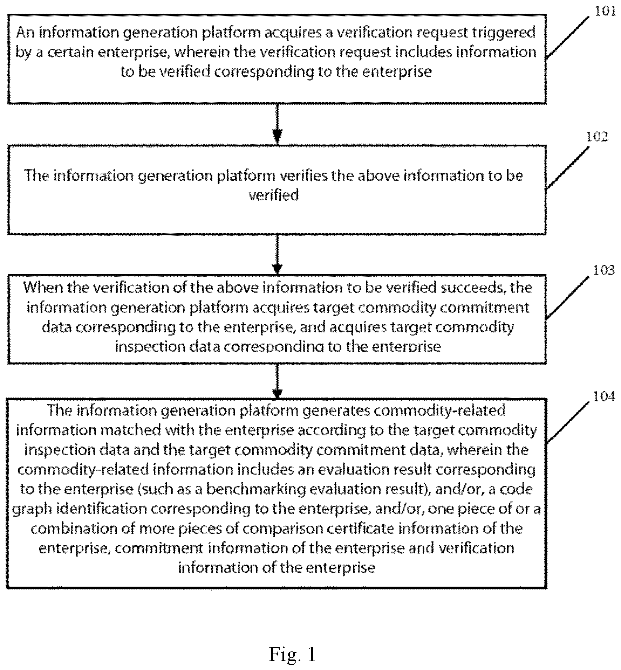

Referring to Fig. 1, Fig. 1 is a schematic flow chart of an Internet-based commodity-related information generation method disclosed by an embodiment of the present invention. The method described in Fig. 1 can be applied to an information generation platform. The information generation platform may be a server or an information generation device. The server may be a local server or a remote server or a cloud server. The embodiment of the present invention is not limited to this. As shown in Fig. 1, the Internet-based commodity-related information generation method may include the following operations:

In 101, the information generation platform acquires a verification request triggered by a certain enterprise. The verification request includes information to be verified corresponding to the enterprise.

In the embodiment of the present invention, the verification request may be triggered by the enterprise through application software installed in a mobile phone, a tablet and other mobile terminals or an applet in the application software, or may be triggered by the enterprise who logs in a website corresponding to an information generation platform via a browser in a mobile phone, a computer and other user terminals. The embodiment of the present invention is not limited to this. The verification request is used for asking the information generation platform to verify information to be verified. Optionally, the enterprise is any enterprise that requires generation of commodity-related information or any enterprise that requires generation of commodity-related information and is registered in the information generation platform. It should be noted that the need for generating the commodity-related information can also be understood as a need for benchmarking international information commitment (including benchmarking international green commitment).

For an enterprise who has been registered on the information generation platform, after the enterprise has been successfully registered on the information generation platform, the information generation platform will authorize the enterprise to log in the information generation platform through corresponding login information. When the enterprise has a generation need for commodity-related information, the enterprise first logs in on a login interface provided by the information generation platform; and after successful login, the enterprise enters a corresponding verification interface, and the enterprise submits corresponding information to be verified according to a standard requirement.

In 102, the information generation platform verifies the above information to be verified.

In the embodiment of the present invention, when the verification of the above information to be verified by the information generation platform succeeds, step 103 is triggered and executed. When the verification of the above information to be verified by the information generation platform fails, this flow may be terminated, or prompt information may also be fed back to the enterprise. The prompt information is used for indicating that the verification of the information to be verified submitted by the enterprise is inaccurate, and/or, used for instructing the enterprise to re-submit information to be verified or re-submit the information to be verified that is verified incorrectly. The embodiment of the present invention is not limited to this. It should be noted that the verification of the above information to be verified can be understood as benchmarking international information truth verification (including benchmarking international green verification). Further, after the benchmarking international green verification and the benchmarking international green commitment are performed, a self-declaration for the benchmarking verification can also be made.

Optionally, after the execution of step 101 is completed, the method further includes the following operations:

The information generation platform determines all types of the above information to be verified, and determines whether all the types include all predetermined target types. When a determination result is positive, step 103 is triggered and executed. In this way, before the verification of the information to be verified, it is first determined whether the types of the information to be verified are comprehensive; and if yes, the subsequent operations are performed. In this way, subsequent unnecessary verification operations can be reduced, which is favorable for improving the accuracy of subsequent verification.

Further, when it is determined that all the types do not include at least one determined target type, the information generation platform outputs an information missing prompt to indicate that the information to be verified submitted by the enterprise is not comprehensive or to indicate types of missing information to be verified, so that the enterprise can quickly supplement the missing information to be verified.

In 103, when the verification of the above information to be verified succeeds, the information generation platform acquires target commodity commitment data corresponding to the enterprise, and acquires target commodity inspection data corresponding to the enterprise.

In the embodiment of the present invention, there is no strict order between the acquisition of the target commodity commitment data corresponding to the enterprise and the acquisition of the target commodity inspection data corresponding to the enterprise. They may be simultaneously acquired. Or, the target commodity inspection data may be acquired first, and the target commodity commitment data may be then acquired. Or, the target commodity commitment data may be acquired first, and the target commodity inspection data may be then acquired. The embodiment of the present invention is not limited to this.

Preferably, if the target commodity commitment data is dependent on the target commodity inspection data, the information generation platform first acquires the target commodity inspection data and then acquires the target commodity commitment data. Further, the target commodity inspection data needs to succeed in verification, that is, if the acquired target commodity inspection data has succeeded in the verification, the subsequent operations may be directly executed; and if the acquired target commodity inspection data fails in the verification, the target commodity inspection data needs to be verified first. Further, the target commodity inspection data may be parsed by the information generation platform from an inspection report that has succeeded in verification or authentication, or may be filled in by an operator corresponding to the information generation platform according to an inspection report that has succeeded in verification or authentication. The embodiment of the present invention is not limited to this.

In 104, the information generation platform generates commodity-related information matched with the enterprise according to the target commodity inspection data and the target commodity commitment data.

In the embodiment of the present invention, the commodity-related information may include an evaluation result corresponding to the enterprise, and/or, a code graph identification (such as a planar two-dimensional code or a three-dimensional multidimensional code) corresponding to the enterprise, and/or, one piece or a combination of more pieces of comparison certificate information of the enterprise, commitment information of the enterprise and verification information of the enterprise; the code graph identification corresponding to the enterprise is used for accessing one or a combination of more of the evaluation result corresponding to the enterprise, the comparison certificate information of the enterprise, the commitment information of the enterprise and the verification information of the enterprise. Specifically, the code graph identification corresponding to the enterprise may be a code graph identification corresponding to a corresponding commodity. The commodity-related information is also related information corresponding to the corresponding commodity. The code graph identification may be carried on the corresponding commodity. A customer can acquire other information content in the commodity-related information except for the code graph identification in a manner of scanning the code graph identification. In this way, the customer can directly obtain the commodity-related information in the manner of scanning the code graph identification, which is favorable for increasing the disclosure degree of the commodity-related information and ensuring the customer's know about the commodity.

Optionally, the evaluation result corresponding to the enterprise may include a benchmarking evaluation result corresponding to the enterprise, and the benchmarking evaluation result corresponding to the enterprise represents a comparison result between the target commodity commitment data corresponding to the enterprise and standard data of at least one country. For example, the comparison result may be a percentage of the target commodity commitment data that is superior to the standard data of at least one country. For another example, the comparison result may be "condition is satisfied", "condition is not satisfied", and the like. The embodiment of the present invention is not limited to this.

In one optional embodiment, the above information to be verified may include one piece of or combined information of at least two pieces of business-related information of the enterprise, current intellectual property information of the enterprise, commodity inspection report information of the enterprise and authentication certificate information of the enterprise. It should be noted that the combined information specifically represents that the above information to be verified includes at least two types of information. For example, if the above information to be verified includes both the business-related information of the enterprise and the current intellectual property information of the enterprise, the above information to be verified is combined information. It can be seen that the optional embodiment can verify diversified information of the enterprise, and thus can improve the truth, accuracy and reliability of the subsequently generated commodity-related information.

Further optionally, when the above information to be verified is the combined information, the fact that the verification by the information generation platform to the above information to be verified succeeds is specifically as follows:

The verification of all the pieces of information of target types included in the combined information succeeds. For example, if the target types are a business information type, an inspection report type and an authentication certificate type, when the verification of the business-related information of the enterprise, the verification of the commodity inspection report information of the enterprise and the verification of the authentication certificate information of the enterprise all succeed, the verification of the information to be verified succeeds; or,
the number of all pieces of information, succeeding in the verification, in the combined information is greater than or equal to a preset first number threshold. For example, if the combined information includes the above four types of information, when the first number threshold is 3, it indicates that the verification of the information to be verified succeeds only if the verification of at least three types of information succeeds; and when the first number threshold is 4, it indicates that the verification of the information to be verified succeeds only if the verification of all pieces of information in the above four types of information succeeds; or,
the number of pieces of target information, succeeding in the verification, in all pieces of information of target types included in the combined information is greater than or equal to a preset second number threshold. For example, if the combined information includes the above four types of information, and the target types are the business information type, the inspection report type and the authentication certificate type, and the second number threshold is 2, when the verification of at least two types of information among the business-related information, the commodity inspection report information of the enterprise and the authentication certification information of the enterprise succeeds, it indicates that the verification of the above information to be verified succeeds.

In this optional embodiment, as an optional implementation, when the information to be verified includes the business-related information of the enterprise, the step that the information generation platform verifies the information to be verified includes:
the information generation platform determines a current enterprise state of the enterprise according to the business-related information of the enterprise;
when the current enterprise state represents that a current registration state of the enterprise is a non-existence state, represents that a running state of the enterprise is an abnormal running state or represents that a credit state of the enterprise is an illegal dishonest state, the information generation platform determines that the verification of the business-related information fails;
when the current enterprise state represents that a current registration state of the enterprise is an existence state, represents that a running state of the enterprise is a normal running state or represents that a credit state of the enterprise is an honest state, the information generation platform determines that the verification of the business-related information succeeds.

For example, the above-mentioned business-related information includes the industrial and commercial information filled in by the enterprise on a verification interface and an original of the business license for enterprise or a copy of the business license for enterprise or a transcript of the business license for enterprise. Specifically, after filling in "enterprise name" and "unified social credit code for enterprise" in the column of business information, the enterprise is linked to a third-party API data interface through a verification module included in the information generation platform or a "business information identification and verification submodule" in the verification module, so as to further acquire the following content:
(1) a registration state: if the registration state is existence, the verification of the registration state succeeds, and a screenshot can be further saved. If the registration state is non-existence, the verification of the registration state fails, and the information generation platform will make a prompt to prompt the enterprise to reenter the verification interface for resubmission;
(2) information about an abnormal-running list: if there is no abnormal-running list information temporarily, the verification of a running state succeeds, and a screenshot can be further saved. If there is abnormal-running list information, the verification of a running state fails, and the information generation platform makes a prompt to prompt the enterprise to reenter the verification interface for resubmission; and
(3) information about a list of dishonest enterprises who break the law on a serious scale (blacklist): if there is no information about a list of dishonest enterprises who break the law on a serious scale (blacklist) temporarily, the verification of a credit state succeeds, and a screenshot can be further saved. If there is information about a list of dishonest enterprises who break the law on a serious scale (blacklist), the verification of the credit state fails, and the information generation platform makes a prompt to prompt the enterprise to reenter the verification interface for resubmission.

As an optional implementation, when the above information to be verified includes the current intellectual property information of the enterprise, the step that the information generation platform verifies the information to be verified includes:
the information generation platform compares whether the current intellectual property information is consistent with pre-acquired target intellectual property information of the same type;
when it is compared that the current intellectual property information is consistent with the target intellectual property information, the information generation platform determines that the verification of the current intellectual property information succeeds; and
when it is compared that the current intellectual property information is inconsistent with the target intellectual property information, the information generation platform determines that the verification of the current intellectual property information fails.

The pre-acquired target intellectual property information of the same type may be acquired by the information generation platform linked to the third-party API data interface through the verification module of the information generation platform or an "intellectual property identification and verification submodule" in the verification module.

Optionally, the current intellectual property information of the enterprise includes one piece or a combination of more pieces of current applied patent information of the enterprise, current registered trademark information of the enterprise, current registered works copyright information of the enterprise and current registered software copyright information of the enterprise.

For example, the above intellectual property information of the enterprise is patent information filled in by the enterprise. Specifically, the enterprise fills in "patent name", "applicant name" and "patent application number" in the patent column, and is linked to the third-party API data interface through the verification module or an "intellectual property identification and verification submodule" in the verification module, so as to obtain the following information:
(1) a patent application number: if it is consistent with the patent application number submitted by the enterprise, the verification of the patent application number succeeds, and a screenshot can be further saved. If it is inconsistent with the patent application number submitted by the enterprise, the verification of the patent application number fails, and the information generation platform makes a prompt to prompt the enterprise to reenter the verification interface for resubmission;
(2) a valid date: if it represents valid, the verification of the valid date succeeds, and a screenshot is further saved. If it represents invalid, the verification of the valid date fails, and the information generation platform makes a prompt to prompt the enterprise to prompt the enterprise to reenter the verification interface for resubmission;
(3) an applicant name: if it is consistent with the applicant name submitted by the enterprise, the verification of the applicant name succeeds, and a screenshot can be further saved. If it is inconsistent with the applicant name submitted by the enterprise, the verification of the applicant name fails, and the information generation platform makes a prompt to prompt the enterprise to reenter the verification interface for resubmission; and
(4) a patent name: if it is consistent with the patent name submitted by the enterprise, the verification of the patent name succeeds, and a screenshot can be further saved. If it is inconsistent with the patent name submitted by the enterprise, the verification of the patent name fails, and the information generation platform makes a prompt to prompt the enterprise to reenter the verification interface for resubmission.

As another optional implementation, when the information to be verified includes the authentication certificate information of the enterprise, the step that the information generation platform verifies the information to be verified includes:
the information generation platform acquires certificate information matched with the certificate type from the authentication certificate information of the enterprise according to a certificate type indicated by the authentication certificate information of the enterprise;
when the certificate information includes a certificate state and the certificate state represents that a certificate of the enterprise is invalid, the information generation platform determines that the verification of the authentication certificate information of the enterprise fails;
when the certificate information includes inherent certificate information and the inherent certification information is inconsistent with pre-acquired correct inherent certificate information, the information generation platform determines that the verification of the authentication certificate information of the enterprise fails; and
when the certificate state included by the certificate information represents that the certificate of the enterprise is valid and the inherent certificate information included by the certificate information is consistent with the pre-acquired correct inherent certificate information, the information generation platform determines that the verification of the authentication certificate information of the enterprise succeeds.

The inherent certificate information includes at least one of a certificate number of the enterprise, an enterprise name of the enterprise and a unified social credit code of the enterprise.

For example, the enterprise can fill in "certificate number", "unified social credit code" and "enterprise name" in the authentication certificate column. The information generation platform is linked to the third-party API data interface through the verification module or an "authentication certificate identification and verification submodule" included in the verification module, so as to acquire the following information:
(1) a certificate number: if it is consistent with the certificate number submitted by the enterprise, the verification of the certificate number succeeds, and a screenshot can be further saved. If it is inconsistent with the certificate number submitted by the enterprise, the verification of the certificate number fails, and the information generation platform makes a prompt to prompt the enterprise to reenter the verification interface for resubmission;
(2) a certificate date: if it represents valid, the verification of the certificate date succeeds, and a screenshot is further saved. If it represents revocatory, the verification of the certificate date fails, and the information generation platform makes a prompt to prompt the enterprise to prompt the enterprise to reenter the verification interface for resubmission;
(3) a unified social credit code of the enterprise: if it is consistent with the unified social credit code submitted by the enterprise, the verification of the unified social credit code succeeds, and a screenshot can be further saved. If it is inconsistent with the unified social credit code submitted by the enterprise, the verification of the unified social credit code fails, and the information generation platform makes a prompt to prompt the enterprise to reenter the verification interface for resubmission; and
(4) an enterprise name: if it is consistent with the enterprise name submitted by the enterprise, the verification of the enterprise name succeeds, and a screenshot can be further saved. If it is inconsistent with the enterprise name submitted by the enterprise, the verification of the enterprise name fails, and the information generation platform makes a prompt to prompt the enterprise to reenter the verification interface for resubmission.

As yet another optional implementation, when the information to be verified includes the commodity inspection report information of the enterprise, the step that the information generation platform verifies the information to be verified includes:
the information generation platform compares whether the commodity inspection report information of the enterprise is consistent with pre-acquired correct inspection report information of the enterprise, wherein the pre-acquired correct inspection report information of the enterprise is acquired by the information generation platform through an API of a corresponding inspection institution or is queried on an official website of the corresponding inspection institution or is obtained by scanning a two-dimensional code included in the commodity inspection report information of the enterprise to access a website database of the corresponding inspection institution;
when it is compared that the commodity inspection report information of the enterprise is consistent with pre-acquired correct inspection report information of the enterprise, the information generation platform determines that the verification of the commodity inspection report information of the enterprise succeeds;
when it is compared that the commodity inspection report information of the enterprise is inconsistent with pre-acquired correct inspection report information of the enterprise, the information generation platform determines that the verification of the commodity inspection report information of the enterprise fails; or,
the information generation platform sends the commodity inspection report information of the enterprise to a determined inspection institution, and acquires a feedback result of the inspection institution; when the feedback result is empty or the feedback result represents that the commodity inspection report information of the enterprise is incorrect, determines that the verification of the commodity inspection report information of the enterprise fails; and when the feedback result represents that the commodity inspection report information of the enterprise is correct, determines that the verification of the commodity inspection report information of the enterprise succeeds.

In this optional implementation, if the inspection institution opens the API to the information generation platform, the information generation platform can directly uses data in an inspection report of the inspection institution that has a matching number; if the inspection institution that issues the inspection report submitted by the enterprise does not have an API or does not open the API to the information generation platform, the inspection report information is verified in the following three ways:
(1) A rear terminal of the information generation platform emails the inspection report and an inspection report verification sheet to the inspection institution, and the inspection institution fills in the verification sheet in a reply email and determines, through the verification module or an "inspection report identification and verification submodule" included in the verification module, whether it is successful (correct) or failed (incorrect). If it is successful (correct), the verification succeeds, and a screenshot can be further saved. If it is failed (incorrect), the verification fails, and the information generation platform makes a prompt to prompt the enterprise to reenter the verification interface for resubmission.
(2) The rear terminal of the information generation platform performs query on the official website of the inspection institution by using related information such as the inspection report number provided by the enterprise. If the information is consistent, the verification succeeds, data of the inspection institution is used, and a screenshot can be further saved. If the information is inconsistent, the verification fails, and the information generation platform makes a prompt to prompt the enterprise to reenter the verification interface for resubmission.
(3) A two-dimensional code of the inspection report is scanned through the rear terminal of the information generation platform to access a web database of the inspection institution, and data in the inspection report of the inspection institution that has a matching number is used. If the information is consistent, the verification succeeds, data of the inspection institution is used, and a screenshot can be further saved. If the information is inconsistent, the verification fails, and the information generation platform makes a prompt to prompt the enterprise to reenter the verification interface for resubmission.

It can be seen that implementing the Internet-based commodity-related information generation method described in Fig. 1 can provide a commodity-related information generation mode. After the verification of related information submitted by the enterprise succeeds, commodity-related information is generated, thus generating true, valid and intuitive commodity-related information and improving the reliability and accuracy of the generated commodity-related information. Furthermore, the generated commodity-related information is diversified, so that the disclosure degree of the commodity-related information can be increased, and the customer's or purchaser's right to know about a commodity is ensured. In this way, the customers or purchasers can select desired commodities according to their own actual needs and the disclosed commodity-related information, which is conductive to enhancing the experience of the customers or purchasers for buying the commodities and achieving best choices for commodities and manufacturers' production of high-quality and good-price products. Moreover, the efficiency of the customers or purchasers for buying commodities can also be improved to a certain extent.

### Embodiment II

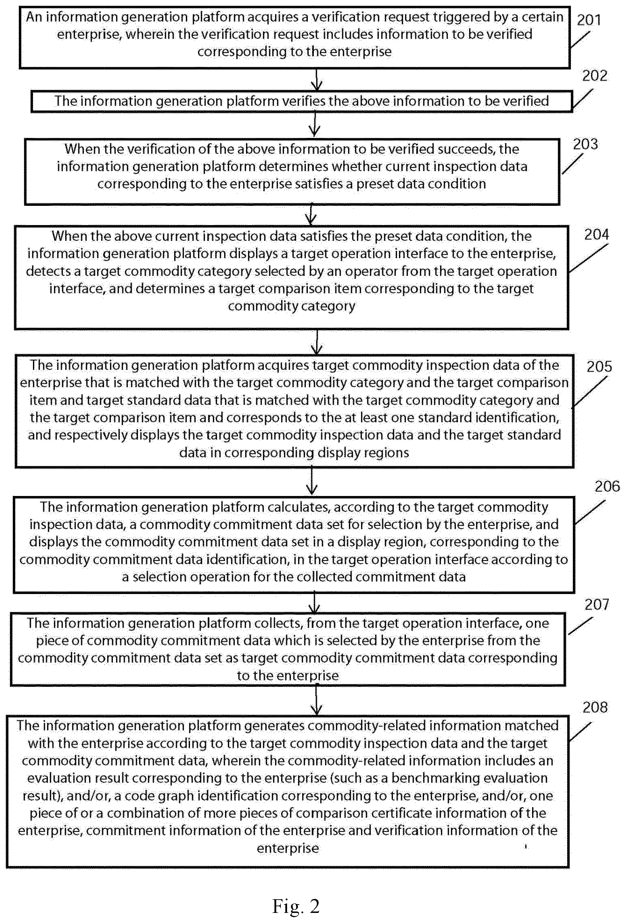

Please refer to Fig. 2, Fig. 2 is a schematic flow chart of another Internet-based commodity-related information generation method disclosed by an embodiment of the present invention. The method described in Fig. 2 can be applied to an information generation platform. The information generation platform may be a server or an information generation device. The server may be a local server or a remote server or a cloud server. The embodiment of the present invention is not limited to this. As shown in Fig. 2, the Internet-based commodity-related information generation method may include the following operations:

In 201, the information generation platform acquires a verification request triggered by a certain enterprise. The verification request includes information to be verified corresponding to the enterprise.

In 202, the information generation platform verifies the above information to be verified.

In the embodiment of the present invention, when the verification of the above information to be verified by the information generation platform succeeds, step 203 is triggered and executed.

It should be noted that other related descriptions for step 201 to step 202 refer to the related descriptions for step 101 to step 102 in Embodiment I. Repeated descriptions are omitted in the embodiments of the present invention.

In 203, when the verification of the above information to be verified succeeds, the information generation platform determines whether current inspection data corresponding to the enterprise satisfies a preset data condition; when a determination result of step 203 is positive, the information generation platform triggers and executes step 204; and when a determination result of step 203 is negative, the information generation platform prompts the enterprise that the current inspection data does not meet a requirement of the information generation platform.

As an optional implementation, the step that the information generation platform determines whether current inspection data corresponding to the enterprise satisfies a preset data condition includes:
the information generation platform determines whether all pieces of inspection data or target inspection data in the current inspection data corresponding to the enterprise meet a preset first data standard; when a determination result is positive, determines that the current inspection data corresponding to the enterprise satisfies the preset data condition; or,
the information generation platform determines whether all pieces of inspection data in the current inspection data corresponding to the enterprise meet a predetermined first data standard and whether the number of pieces of target data, which are superior to the first data standard, among all pieces of target data of the current inspection data corresponding to the enterprise is greater than or equal to a preset number threshold; when a determination result is positive, determines that the current inspection data corresponding to the enterprise satisfies the preset data condition; or,
the information generation platform determines whether the number of pieces of target data, which are superior to the predetermined first data standard, among all pieces of target data of the current inspection data corresponding to the enterprise is greater than or equal to the preset number threshold; and when a determination result is positive, determines that the current inspection data corresponding to the enterprise satisfies the preset data condition.

It should be noted that when the current inspection data corresponding to the enterprise satisfies the preset data condition, it can be considered that the current inspection data corresponding to the enterprise is inspection data that has succeeded in verification or authentication.

The fact that certain data is superior to the first data standard indicates that the data is superior to a preset multiple of data corresponding to the first data standard. The preset multiple can be properly adjusted according to an actual situation. For example, it can be properly adjusted according to an actual standard level of the industry. Optionally, the first data standard may be a national data standard corresponding to the current inspection data, which may be a China national standard by default or may select a suitable national standard according to the type of the enterprise. The embodiment of the present invention is not limited to this.

For example, after the verification of the information to be verified of a certain enterprise succeeds, the information generation platform may first determine whether the product quality of the enterprise and environmental indicators all meet the national standard and the inspection data of at least one primary environmental indicator or quality indicator is superior to the national standard by 30% or above. If yes, the subsequent flow can be performed; and if no, it prompts that the enterprise does not meet a requirement.

In 204, when the above current inspection data satisfies the preset data condition, the information generation platform displays a target operation interface to the enterprise, detects a target commodity category selected by an operator from the target operation interface, and determines a target comparison item corresponding to the target commodity category.

The target operation interface may also be understood as "standard comparison self-declaration interface". Optionally, the target operation interface is used for displaying a plurality of commodity categories for selection by the enterprise, a plurality of comparison items corresponding to each commodity category, at least one determined standard identification, a commodity inspection data identification and a commodity commitment data identification. Further optionally, a plurality of commodity categories for selection by the enterprise may be one-level categories or may be multi-level categories. The multi-level categories may include first-level categories, at least one second-level category in each first-level category, at least one third-level category in each second-level category, and so on. The number of levels of a commodity category can be adaptively selected or adjusted according to an actual situation. Optionally, the at least one determined standard identification may include at least one national standard identification, such as China standard, EU standard, and United States standard.

For example, the first-level category may include furniture and food. When the first-level category is furniture, the second-level category corresponding to the first-level category may be raw materials, and the third-level category corresponding to the raw materials of the second-level category may be plates, hot melt adhesives, paint, and the like.

The operator may be an operator corresponding to the enterprise or may be an operator corresponding to the information generation platform. When the operator is the operator corresponding to the information generation platform, the operator selects the target commodity category according to an actual need of the enterprise. It should be noted that the information generation platform may preset comparison items corresponding to different commodity categories. When the operator selects a target commodity category, the information generation platform can automatically determine a target comparison item; or after the operator selects a target commodity category, the information generation platform may also first provide a plurality of comparison items corresponding to the target commodity categories for further selection by the operator; and after the operator selects a comparison item, the comparison item selected by the operator may be determined as a target comparison item corresponding to the target commodity category.

In 205, the information generation platform acquires target commodity inspection data of the enterprise that is matched with the target commodity category and the target comparison item and target standard data that is matched with the target commodity category and the target comparison item and corresponds to the at least one standard identification, and respectively displays the target commodity inspection data and the target standard data in corresponding display regions.

The acquired target commodity inspection data is true and valid data that has succeeded in verification or authentication, and may be filled in by an operator authorized by the information generation platform, or may be automatically analyzed and extracted by the information generation platform from the inspection report information that has succeeded in the verification. The embodiment of the present invention is not limited to this.

Specifically, the step that the information generation platform respectively displays the data in corresponding display regions includes: the target commodity inspection data is displayed in a display region, corresponding to the commodity inspection data identification, in the target operation interface, and the target standard data corresponding to the at least one standard identification is displayed in a display region, corresponding to the standard identification, in the target operation interface.

In 206, the information generation platform calculates, according to the target commodity inspection data, a commodity commitment data set for selection by the enterprise, and displays the commodity commitment data set in a display region, corresponding to the commodity commitment data identification, in the target operation interface according to a selection operation for the collected commitment data.

In the embodiment of the present invention, optionally, the commodity commitment data set includes a plurality of pieces of commodity commitment data.

Optionally, the information generation platform can directly establish a maximum data range list available for the commodity commitment data. Reverse comparison of emissions of harmful substances is taken as an example. That is, when the commodity inspection data is 0, there are most available commodity commitment data. Specifically, the information generation platform sets the first commodity commitment data of the list as a maximum value that the enterprise can commitment. No matter what the commodity inspection data is, an available commodity commitment data maximum value is directly determined according to the determined national standard. Since the national standard is fixed, the commodity commitment data maximum value is also a fixed value. This commodity commitment data maximum value is not placed at the most bottom of the list, otherwise, when the commodity inspection data is greater than 0, the commodity commitment data maximum value may possibly appear behind the data that is larger than the maximum value in the data list, which is inconvenient for the operation for selection and is not conductive to improving the selection efficiency of the operator. The second data of the list is calculated using a formula (inspection indicator value+national standard*first preset numerical value); the third data is implemented using a formula (inspection indicator value+national standard*second preset numerical value) or using a formula (second data+national standard*first preset numerical value), and so on. In this way, the numerical values of the data list are related to the inspection indicator value, and the data list will be different according to different input inspection indicator values. After the list is established, the information generation platform can directly display a pull-down list at a corresponding position. The national standard is determined according to a specific country. The first preset value and the second preset value can be property adaptively adjusted according to an actual situation and are increased in sequence. It should be particularly noted that the inspection indicator value is the commodity inspection data.

For example, the national standard where the formaldehyde emission of furniture is less than or equal to 0.124 mg/m³ is taken as an example. The commodity commitment data included in the commodity commitment data set has a progressive increase according to 10% of the national standard, a minimum value of which is "commodity inspection data+10% of national standard" and a maximum value of which is "greater than 20% of national standard", that is, the maximum value is 0.0992 mg/m³. It should be noted that a specific progressive increase standard and a percentage used in calculation can be adaptively adjusted according to an actual situation. The commodity commitment data set can be displayed in the corresponding display region in the form of a data list.

Further optionally, during displaying of the commodity commitment data set, only selectable commodity commitment data is displayed. For example, commodity commitment data that is not greater than the maximum value is displayed, or all calculated commodity commitment data can be displayed. When the operator selects commodity commitment data that does not meet a requirement, "An error occurs, please re-select it" is prompted. Further, during displaying of all the calculated commodity commitment data, selectable commodity commitment data can be displayed in the front of unselectable commodity commitment data; or, selectable commodity commitment data and unselectable commodity commitment data can be distinguished in different colors. For example, selectable commodity commitment data is displayed in black, and unselectable commodity commitment data is displayed in grey, which is conductive to improving the efficiency and accuracy of the operator for selecting the commodity commitment data.

In 207, the information generation platform collects, from the target operation interface, one piece of commodity commitment data which is selected by the enterprise from the commodity commitment data set as target commodity commitment data corresponding to the enterprise.

In the embodiment of the present invention, after the target commodity commitment data is collected, the information generation platform may automatically calculate a percentage of the target commodity commitment data that is superior to the standard data of a certain country. This percentage may be directly used as an evaluation result corresponding to the enterprise, or it may determine, according to the size of the percentage, whether the target commodity commitment data of the enterprise satisfies a condition and a determination result is used as an evaluation result corresponding to the enterprise.

In 208, the information generation platform generates commodity-related information matched with the enterprise according to the target commodity inspection data and the target commodity commitment data.

Optionally, the commodity-related information includes an evaluation result corresponding to the enterprise, and/or, a code graph identification corresponding to the enterprise, and/or, one piece or a combination of more pieces of comparison certificate information of the enterprise, commitment information of the enterprise and verification information of the enterprise; the code graph identification corresponding to the enterprise is used for accessing one or a combination of more of the evaluation result corresponding to the enterprise, the comparison certificate information of the enterprise, the commitment information of the enterprise and the verification information of the enterprise. Further optionally, the evaluation result corresponding to the enterprise may include a benchmarking evaluation result corresponding to the enterprise, and the benchmarking evaluation result corresponding to the enterprise represents a comparison result between the target commodity commitment data corresponding to the enterprise and standard data of at least one country. For example, the comparison result may be a percentage of the target commodity commitment data that is superior to the standard data of at least one country. For another example, the comparison result may be "condition is satisfied", "condition is not satisfied", and the like. The embodiment of the present invention is not limited to this.

Optionally, after the execution of step 207 is completed and before step 208 is executed, the method may further include the following operations:
the information generation platform detects whether the operator triggers the operation of generating commodity-related information, and triggers and executes step 208 when a detection result is positive. In this way, the mode for executing the operation of generating commodity-related information triggered by the operator is conductive to reducing unnecessary commodity-related information generation operations, so as to reduce waste of related data processing resources of the information generation platform.

It can be seen that implementing the Internet-based commodity-related information generation method described in Fig. 2 can provide a commodity-related information generation mode. After the verification of related information submitted by the enterprise succeeds, commodity-related information is generated, thus generating true and valid commodity-related information and improving the reliability and accuracy of the generated commodity-related information. Furthermore, the generated commodity-related information is diversified, so that the disclosure degree of the commodity-related information can be increased, and the customer's right to know about a commodity is ensured. In this way, the customers can select desired commodities according to their own actual needs and the disclosed commodity-related information, which is conductive to enhancing the experience of the customers for buying the commodities. Moreover, the efficiency of the customers for buying commodities can also be improved to a certain extent. Furthermore, a target operation interface can also be provided for the enterprise to make a personal commitment and self-declaration, so that it can be convenient for customers to learn about commitment indicators of the enterprise and comparison results of the national standard, which is conductive to promoting unsatisfactory enterprises to be developed towards a satisfactory direction and promoting satisfactory enterprises to be developed towards a better direction.

In one optional embodiment, after any one or more of the target commodity inspection data, the at least one target standard data and the target commodity commitment data are determined, the method may further include the following operations:
the information generation platform generates a matching data display graph according to a predetermined data display form, wherein the data display graph is used for displaying at least one of the target commodity inspection data, standard data corresponding to the at least one standard identification and the target commodity commitment data according to the data display form; and
the information generation platform displays the data display graph on the target operation interface.

In this optional embodiment, optionally, the data display graph is a test tube model graph, and the test tube model graph is used for displaying the following content:
data scales and indication identifications on the data scales for indicating sizes of displayed data, and/or, the evaluation result corresponding to the enterprise.

The evaluation result corresponding to the enterprise is used for representing a comparison result between the target commodity commitment data corresponding to the enterprise and the target standard data corresponding to the at least one standard identification. When the comparison result is a specific percentage, a specific calculation formula is: (1-commitment indicator value/China standard)* 100%.

Optionally, different data may be indicated by different indication identifications, and data identifications of corresponding data may be further displayed at the indication identifications. The embodiment of the present invention is not limited to this.

It should be noted that when there are a plurality of pieces of determined target standard data, the target commodity commitment data may be compared with each piece of target standard data or compared with one or more pieces of target standard data. The embodiment of the present invention is not limited to this.

Further optionally, steps of establishing the test tube model graph may include:
test tube scale values are established: for example, a test tube is averagely divided into 20 grids; if the national standard value (0.124 mg/m³) of a comparison item is located at the 15th scale of the test tube, a scale value for one grid is equal to 0.124/15, a scale value of two grids is equal to value of one scale*2, and a scale value of three grids is equal to scale value of one grid*3, and so on;
scales corresponding to test tube data are automatically generated: for example, a scale value of China standard/one grid is approximately equal to the position of the number of grids (which is accurate to four decimal places); EU standard/scale value of one grid is approximately equal to the position of the number of grids (which is accurate to four decimal places); and commitment indicator/scale value of one grid is approximately equal to the position of the number of grids (which is accurate to four decimal places).

It can be seen that this optional embodiment can also display corresponding data through a corresponding data display graph. Furthermore, during displaying of the corresponding data, sizes of data can also be further indicated through indication identifications, and specific benchmarking evaluation results or comparison results can also be displayed, so that an effect of displaying detailed data through the data display graph is achieved, and the data and results can be displayed more intuitively.

In another optional embodiment, the method may further include the following operations:
after generating the commodity-related information, or after generating the commodity-related information and determining that the commodity-related information satisfies a predetermined information condition, the information generation platform generates target information that is required to be confirmed by the enterprise, and sends the target information to the enterprise for confirmation and feedback;
when feedback information from the enterprise aiming at the target information is received, the information generation platform verifies the feedback information; when the verification succeeds, generates link information of one or a combination of more of an evaluation result corresponding to the enterprise, comparison certificate information of the enterprise, commitment information of the enterprise and verification information of the enterprise, and sends the link information to the enterprise, wherein the link information is used for the enterprise to access and preview the related information.

It should be noted that this optional embodiment can also be understood as making a self-declaration for the benchmarking verification.

The fact that the commodity-related information satisfies the preset information condition may include that the target commodity inspection data and the target commodity commitment data need to meet the standard of a benchmarking threshold of the information generation platform. Further, it may also include that the benchmarking evaluation result represents that a target commodity commitment indicator is superior to a product of the national standard and the preset percentage.

In this optional embodiment, the target information may include information that is required to be filled in by the enterprise and/or information that is required by seal confirmation of the enterprise; after the enterprise receives the target information, for the information that is required by seal confirmation of the enterprise, if it is agreed, the enterprise needs to download a corresponding agreement confirmation and seal it; and the sealed agreement confirmation is used as corresponding feedback information. The enterprise fills in the information that is required to be filled in by the enterprise, and the filled in information is used as corresponding feedback information. Furthermore, after the feedback information of the enterprise aiming at the target information is received, the information generation platform can identify key content of the feedback information by means of image processing and/or semantic identification, and verify whether the key content meets a requirement; and when the key content is verified to meet the requirement, it is determined that the verification of the feedback information succeeds. Or, the information generation platform can also output the feedback information or send it to a corresponding audit staff, and the corresponding audit staff manually checks the feedback information and determines, according to a manual check result, whether the verification of the feedback information succeeds. For example, the key content may include seal information and insurance underwriting information in the feedback information. If the seal information represents that the enterprise has sealed the confirmation and is matched with the enterprise, and the insurance underwriting information has complete and accurate content, it is determined that the verification of the feedback information succeeds.

Optionally, the content of the insurance underwriting information may specifically include content of related compensation required when actual commodity commitment data of the enterprise is not consistent with the reality.

Optionally, when the verification of the feedback information fails, the information generation platform can prompt the enterprise of the reason of the failure of the verification, and can also further prompt the enterprise to return to a self-declaration interface for self-declaration again.

Optionally, the above target information may include at least one of commitment declaration information (such as a self-declaration letter of commitment), verification entrust information (such as a verification entrust declaration contract) and insurance underwriting information. Further optionally, the commitment declaration information may specifically be a self-declaration letter of commitment supplied by the enterprise to customers or purchasers.

It can be seen that in this optional embodiment, after the commodity-related information is generated, the enterprise is enabled to make a voluntary commitment self-declaration by means of sending the target information to the enterprise, which is conductive to further ensuring the accuracy and reliability of the commodity-related information or related data (such as the commodity inspection data and the commodity commitment data) for generating the commodity-related information.

In this optional embodiment, further optionally, after the verification of the feedback information succeeds, the method may also include the following operations:
the information generation platform calculates a target fee to be paid by the enterprise for the enterprise to pay, wherein the enterprise may pay the target fee online or offline;
the information generation platform detects whether the target fee is paid successfully, when a detection result is positive, triggers and executes the operation of generating link information of one or a combination of more of an evaluation result corresponding to the enterprise, comparison certificate information of the enterprise, commitment information of the enterprise and verification information of the enterprise.

It can be seen that in this optional embodiment, the enterprise can experience, by means of paying a corresponding fee, a personalized preview service provided by the information generation platform, so that certain benefits can be brought to the information generation platform.

Further optionally, after the information generation platform sends the link information to the enterprise, the method further includes:
the information generation platform receives confirm information from the enterprise aiming at related information previewed by means of the link information;
the information generation platform determines whether the confirm information satisfies the preset condition, and when a determination result is positive, publishes information indicating that the enterprise has confirmed the related information.

The step that the information generation platform determines whether the confirm information satisfies the preset condition includes:
the information generation platform determines whether the confirm information is a self-declaration confirmation sealed by the enterprise, and when a determination result is positive, determines that the verification of the confirm information succeeds.

Optionally, the published information that has been confirmed by the enterprise may include one certificate and two sheets corresponding to the enterprise. For a single sheet, the single sheet can be split into at least two sheets if it contains more content. In this case, the published information includes one certificate and multiple sheets corresponding to the enterprise. One certificate is generated according to the comparison certificate information of the enterprise, and the two sheets are respectively generated according to the commitment information of the enterprise and the verification information of the enterprise. That is, a database of the information generation platform stores a one-certificate two-sheet model built according to different products, and one certificate and two sheets which can be previewed by a background are gradually generated after the processes of fill-in of the information by the enterprise, verification, check, access, result evaluation and the like are completed.

Further optionally, after one certificate and two sheets are published, the enterprise may enter a download page corresponding to the information generation platform to preview and/or download one certificate and two sheets of the enterprise.

Further optionally, after one certificate and two sheets are generated, the information generation platform may also generate a corresponding code graph identification (such as a two-dimensional code and a three-dimensional code). The code graph identification may be carried on a corresponding commodity, so that customers acquire the corresponding one certificate and two sheets by means of scanning the code graph identification, thus disclosing true, diversified and detailed commodity-related information to customers and ensuring the customer's right to know. Therefore, the customers select suitable commodities in combination with actual own needs according to the commodity-related information, which is thus conductive to pushing the enterprise to be developed towards a better direction. In addition, after scanning the code graph identification to preview one certificate and two sheets, customers can also feed back complaints/suggestions for commodities or the enterprise to the information generation platform, so that the information generation platform provides the complaints/suggestions of customers to the corresponding enterprise, so as to provide a reference basis for enterprise optimization or enterprise development. Further, the information generation platform can also send a feedback result of the enterprise for the complaints/suggestions of customers to the corresponding customers, so that the customers can know the corresponding handling of the enterprise and supervise the enterprise.

It should be noted that the confirm information received by the information generation platform may also be manually checked by related personnel authorized by the information generation platform.

It should be noted that when the check or verification of the confirm information fails, the enterprise needs to re-make a feedback.

It can be seen that in this optional embodiment, the generated commodity-related information may also be previewed for confirmation, which is conductive to further improving the accuracy of the generated commodity-related information.

In yet another optional embodiment, the above target comparison item is a positive comparison item or a negative comparison item. One of the purposes of setting a comparison item in the present invention is to disclose information to the customers. Since the positive comparison item is a high-quality indicator and the negative comparison item is a harmful indicator, the customers select commodities with maximum high-quality indicators and minimum harmful indicators according to specific numerical values of the comparison items, thus promoting the enterprise to achieve high-quality indicator maximization and harmful indicator minimization.

For example, for the furniture, the corresponding comparison item may be formaldehyde emission, which is a harmful indicator. A smaller numerical value corresponding to the formaldehyde emission is better. For the clothes, the corresponding comparison item may be dry-friction-resistant color fastness, which is a high-quality indicator. A larger numerical value corresponding to the higher dry-friction-resistant color fastness is better.

Optionally, "one certificate" in "one certificate and two sheets" may be specifically "benchmarking international green statement certificate" or "benchmarking international green verification certificate", main content of which may include part or all of the following content:

the certificate number, the enterprise name, the legal representative of enterprise, the enterprise address, declaration description information, the application range, the registered trademark, announcement information, the commodity categories for comparison in the enterprise, the comparison items corresponding to the commodity categories, the national standard of at least one country corresponding to the comparison items, the commodity inspection data of the enterprise, the commodity commitment data of the enterprise, the benchmarking result, the test tube model graph, an announcement website, the inspection institution, a verification institution, the issue date, the valid date of the certificate, the code graph identification, a green statement identification provided by the information generation platform, the declaration of the certificate, an insurance company, and a product quality assurance insurance number.

Optionally, "one sheet" in "one certificate and two sheets" may be specifically "standard comparison commitment sheet" which may mainly include part or all of the following content:
a sheet number (certificate number), at least one comparison item, the national standard of at least one country corresponding to each comparison item, a benchmarking result, a test tube model graph corresponding to each comparison item, declaration information, an insurance company, a product quality assurance insurance number, a code graph identification, and a green statement identification provided by the information generation platform.

For example, the declaration information may be specifically "This certificate is valid only when it is used together with the benchmarking consumption green statement data sheet No. XXX".

Optionally, "the other sheet" in "one certificate and two sheets" may be specifically "enterprise information AI verification sheet" which may mainly include part or all of the following content:
a sheet number (or a certificate number), the business-related information and corresponding AI verification results, a product inspection report and corresponding AI verification results, International standard and production standardization information and corresponding AI verification results, the intellectual property information and corresponding AI verification results, AI platform admittance criterion explanation information and corresponding AI verification results (also referred to as comparison results), a code graph identification, a green statement identification provided by the information generation platform, declaration information, an announcement website, an insurance company, and a product quality assurance insurance number.

It should be further noted that when an enterprise applies for verification, the business-related information that is required to be filled in and submitted by the enterprise or required to be directly submitted may include part or all of the following content:
an enterprise name, a unified social credit code of the enterprise, a legal representative, a registered capital, a registration authority, a type, a start date of business term, a closing date of business term, contacts, a registered address of enterprise, an office address of enterprise, and the like.

It can be seen that implementing the method described by the embodiments of the present invention involves at least four objects (the enterprise, the information generation platform, a third-party system and a customer) and five stages (registration and login, enterprise admittance verification, standard comparison self-declaration, payment and enterprise preview confirm, announcement publishing, and customer's scanning of two-dimensional codes to query one certificate and two sheets). By means of Internet plus enterprise business information identification and verification plus intellectual property identification and verification plus authentication certificate identification and verification plus product inspection report verification sheet identification and verification plus benchmarking threshold and result evaluation plus check of the self-declaration letter of commitment of the enterprise/the verification entrust declaration contract/insurance information/payment state plus preview and confirm/download/seal/upload of one certificate and two sheets of the self-declaration of the enterprise plus generation of exclusive two-dimensional code announcements for one certificate and two sheets plus "benchmarking consumption" achieved by a PC and a mobile terminal, during transaction of a customer, the customer can scan the exclusive two-dimensional code carried on a commodity or product through a mobile phone and other user terminals to timely display one certificate and two sheets (the benchmarking consumption green statement certificate, the standard comparison letter of commitment, and the enterprise information AI verification sheet) on the user terminal, which is understandably and clearly disclosed to the consumer on the user terminal, reflecting the benchmarking quality level of the product and achieving the personal commitment of the enterprise. In this way, the customer can be provided with high quality and good price when the customer buys commodities or products. According to the data, it is beneficial for consumers to choose good commodities from multiple commodities and select better commodities from the good commodities, which not only helps to establish a standardized product brand, but also strengthens the confidence of customers in products, thus improving the product competitiveness and also the protecting the rights and benefits of customers and product manufacturers as much as possible. In addition to the guarantee of the product insurance and manufacturers' self-commitments and self-declarations, the present invention also has four verifications for the admittance of the enterprise and an exclusive two-dimensional code for benchmarking threshold result evaluation, and strives to minimize the risk of purchased self-declaration products with good quality and high environmental friendliness.

### Embodiment III

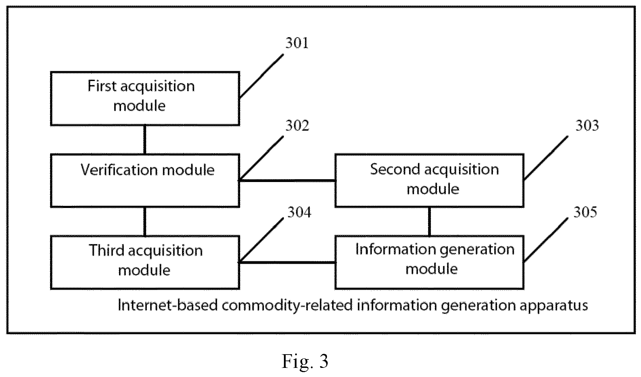

Please refer to Fig. 3, Fig. 3 is a schematic structural diagram of an Internet-based commodity-related information generation apparatus disclosed by an embodiment of the present invention. The apparatus described in Fig. 3 may be applied to an information generation platform. The information generation platform may be a server or an information generation device. The server may be a local server or a remote server or a cloud server. The embodiment of the present invention is not limited to this. As shown in Fig. 3, the apparatus may include:
a first acquisition module 301, configured to acquire a verification request triggered by a certain enterprise, wherein the verification request includes information to be verified corresponding to the enterprise, and the verification request is used for asking the information generation platform to verify the information to be verified; the enterprise is any enterprise that requires generation of commodity-related information or any enterprise that requires generation of commodity-related information and is registered in the information generation platform;
a verification module 302, configured to verify the information to be verified;
a second acquisition module 303, configured to acquire target commodity commitment data corresponding to the enterprise when the verification of the information to be verified by the verification module 302 succeeds;
a third acquisition module 304, configured to acquire target commodity inspection data corresponding to the enterprise when the verification of the information to be verified by the verification module 302 succeeds; and
an information generation module 305, configured to generate commodity-related information matched with the enterprise according to the target commodity inspection data and the target commodity commitment data.

The commodity-related information includes an evaluation result corresponding to the enterprise, and/or, a code graph identification corresponding to the enterprise, and/or, one piece or a combination of more pieces of comparison certificate information of the enterprise, commitment information of the enterprise and verification information of the enterprise; the code graph identification corresponding to the enterprise is used for accessing one or a combination of more of the evaluation result corresponding to the enterprise, the comparison certificate information of the enterprise, the commitment information of the enterprise and the verification information of the enterprise.

It can be seen that implementing the apparatus described in Fig. 3 can generate commodity-related information after the verification of related information submitted by an enterprise succeeds, thus generating true, valid and intuitive commodity-related information and improving the reliability and accuracy of the generated commodity-related information. Furthermore, the generated commodity-related information is diversified, so that the disclosure degree of the commodity-related information can be increased, and the customer's or purchaser's right to know about a commodity is ensured. In this way, the customers or purchasers can select desired commodities according to their own actual needs and the disclosed commodity-related information, which is conductive to enhancing the experience of the customers or purchasers for buying the commodities and achieving best choices for commodities and manufacturers' production of high-quality and good-price products. Moreover, the efficiency of the customers or purchasers for buying commodities can also be improved to a certain extent.

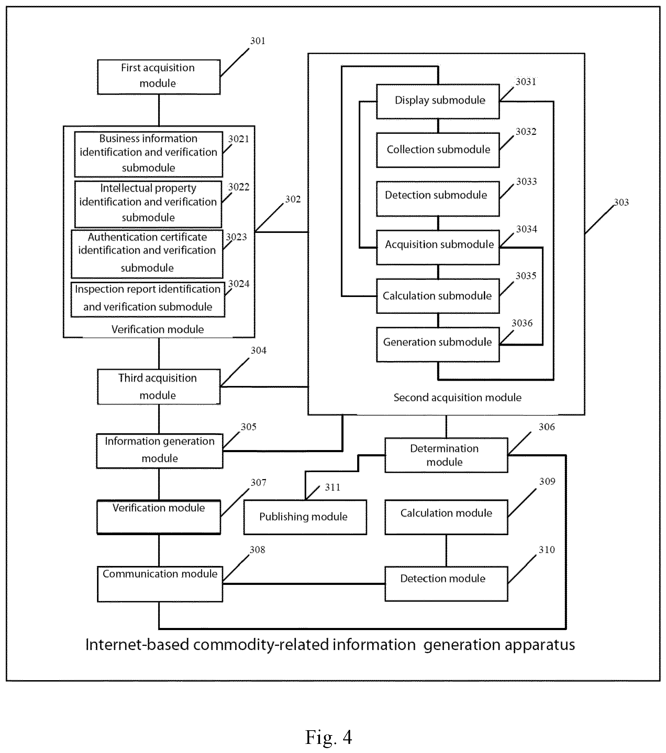

In one optional embodiment, as shown in Fig. 4, the apparatus further includes:
a determination module 306, configured to: after the verification of the information to be verified by verification module 302 succeeds, determine whether the current inspection data corresponding to the enterprise satisfies a preset data condition, and when it is determined that the current inspection data satisfies the data condition, trigger the second acquisition module 303 to execute the operation of acquiring target commodity commitment data corresponding to the enterprise.

The second acquisition module 303 includes:
a display submodule 3031, configured to display a target operation interface to the enterprise when the determination module 306 determines that the current inspection data satisfies the data condition; and
a collection submodule 3032, configured to collect target commodity commitment data corresponding to the enterprise from the target operation interface.

Further optionally, a specific mode that the determination module 306 determines whether current inspection data corresponding to the enterprise satisfies a preset data condition may be:
determining whether all pieces of inspection data or target inspection data in the current inspection data corresponding to the enterprise meet a preset first data standard; when a determination result is positive, determining that the current inspection data corresponding to the enterprise satisfies the preset data condition; or,
determining whether all pieces of inspection data in the current inspection data corresponding to the enterprise meet a predetermined first data standard and whether the number of pieces of target data, which are superior to the first data standard, among all pieces of target data of the current inspection data corresponding to the enterprise is greater than or equal to a preset number threshold; when a determination result is positive, determining that the current inspection data corresponding to the enterprise satisfies the preset data condition; or,
determining whether the number of pieces of target data, which are superior to a predetermined first data standard, among all pieces of target data of the current inspection data corresponding to the enterprise is greater than or equal to a preset number threshold; and when a determination result is positive, determining that the current inspection data corresponding to the enterprise satisfies the preset data condition.

The fact that certain data is superior to the first data standard indicates that the data is superior to a preset multiple (such as a percentage) of data corresponding to the first data standard.

Further optionally, the target operation interface is used for displaying a plurality of commodity categories for selection by the enterprise, a plurality of comparison items corresponding to each commodity category, at least one determined standard identification, a commodity inspection data identification and a commodity commitment data identification.

As shown in Fig. 4, the second acquisition module 303 further includes:
a detection submodule 3033, configured to: before the collection submodule 3032 collects target commodity commitment data corresponding to the enterprise from the target operation interface, detect a target commodity category selected by an operator from the target operation interface, and determine a target comparison item corresponding to the target commodity category;
an acquisition submodule 3034, configured to acquire target commodity inspection data of the enterprise that is matched with the target commodity category and the target comparison item and target standard data that is matched with the target commodity category and the target comparison item and corresponds to the at least one standard identification;
the display submodule 3031, further configured to display the target commodity inspection data in a display region, corresponding to the commodity inspection data identification, in the target operation interface, and display the target standard data corresponding to the at least one standard identification in a display region, corresponding to the standard identification, in the target operation interface; and
a calculation submodule 3035, configured to calculate, according to the target commodity inspection data, a commodity commitment data set for selection by the enterprise; wherein
the display submodule 3031 is further configured to display the commodity commitment data set in a display region, corresponding to the commodity commitment data identification, in the target operation interface according to a selection operation for the collected commitment data.

A specific mode of the collection submodule 3032 for collecting target commodity commitment data corresponding to the enterprise from the target operation interface is:
collecting, from the target operation interface, one piece of commodity commitment data which is selected by the enterprise from the commodity commitment data set as target commodity commitment data corresponding to the enterprise.

Further optionally, as shown in Fig. 4, the second acquisition module 303 may also include:
a generation submodule 3036, configured to: after the acquisition submodule 3033 acquires target commodity inspection data of the enterprise that is matched with the target commodity category and the target comparison item and target standard data that is matched with the target commodity category and the target comparison item and corresponds to the at least one standard identification, generate a matching data display graph according to a predetermined data display form, wherein the data display graph is used for displaying at least one of the target commodity inspection data, standard data corresponding to the at least one standard identification and the target commodity commitment data according to the data display form; and
the display submodule 3032, further configured to display the data display graph on the target operation interface.

Further optionally, the data display graph is a test tube model graph, and the test tube model graph is used for displaying the following content:
data scales and indication identifications on the data scales for indicating sizes of displayed data, and/or, the evaluation result corresponding to the enterprise.

The evaluation result corresponding to the enterprise includes a benchmarking evaluation result corresponding to the enterprise, and the benchmarking evaluation result corresponding to the enterprise represents a comparison result between the target commodity commitment data corresponding to the enterprise and the target standard data corresponding to the at least one standard identification. For example, the comparison result may be a percentage of the target commodity commitment data that is superior to the standard data of at least one country. For another example, the comparison result may be "condition is satisfied", "condition is not satisfied", and the like. The embodiment of the present invention is not limited to this.

Further optionally, the information generation module 305 is also configured to: after generating the commodity-related information, or after generating the commodity-related information and determining that the commodity-related information satisfies a predetermined information condition, generate target information that is required to be confirmed by the enterprise, and send the target information to the enterprise for confirmation and feedback.

As shown in Fig. 4, the apparatus further includes:
a verification module 307, configured to verify the feedback information when feedback information from the enterprise to the target information is received;
the information generation module 305, further configured to: when the verification succeeds, generate link information of one or a combination of more of an evaluation result corresponding to the enterprise, comparison certificate information of the enterprise, commitment information of the enterprise and verification information of the enterprise; and
a communication module 308, configured to send the link information to the enterprise, wherein the link information is used for the enterprise to access and preview the related information.

Further optionally, the target information includes at least one of commitment statement information, verification entrust information and insurance underwriting information.

Further optionally, the target comparison item is a positive comparison item or a negative comparison item.

Further optionally, as shown in Fig. 4, the apparatus may also include:
a calculation module 309, configured to calculate a target fee to be paid by the enterprise for the enterprise to pay after the verification of the feedback information by the verification module 307 succeeds;
a detection module 310, configured to detect whether the target fee is paid successfully, and when a detection result is positive, trigger the information generation module 305 to execute the above operation of generating link information of one or a combination of more of an evaluation result corresponding to the enterprise, comparison certificate information of the enterprise, commitment information of the enterprise and verification information of the enterprise;
the communication module 308, further configured to receive confirm information from the enterprise to related information previewed by means of the link information after sending the link information to the enterprise;
the determination module 306, further configured to determine whether the confirm information satisfies the preset condition; and
a publishing module 311, configured to publish information indicating that the enterprise has confirmed the related information when the determination module 306 determines that the confirm information satisfies the preset condition.

Further optionally, the information to be verified includes one piece of or combined information of at least two pieces of business-related information of the enterprise, current intellectual property information of the enterprise, commodity inspection report information of the enterprise and authentication certificate information of the enterprise.

When the information to be verified includes the combined information, the fact that the verification of the information to be verified by the verification module 302 succeeds is specifically as follows:
verifications of all pieces of information of a target type included in the combined information all succeed; or,
the number of all the pieces of information, succeeding in verification, in the combined information is greater than or equal to a preset first number threshold; or,
the number of pieces of target information, succeeding in verification, in all the pieces of information of the target type included in the combined information is greater than or equal to a preset second number threshold.

Further optionally, as shown in Fig. 4, the verification module 302 may include at least one of a business information identification and verification submodule 3021, an intellectual property identification and verification submodule 3022, an authentication certificate identification and verification submodule 3023 and an inspection report identification and verification submodule 3024.

The business information identification and verification submodule 3021 is configured to: when the information to be verified includes business-related information of the enterprise, determine a current enterprise state of the enterprise according to the business-related information of the enterprise, when the current enterprise state represents that a current registration state of the enterprise is a non-existence state, represents that a running state of the enterprise is an abnormal running state or represents that a credit state of the enterprise is an illegal dishonest state, determine, by the information generation platform, that the verification of the business-related information fails, and when the current enterprise state represents that a current registration state of the enterprise is an existence state, represents that a running state of the enterprise is a normal running state or represents that a credit state of the enterprise is a honest state, determine, by the information generation platform, that the verification of the business-related information succeeds.

The intellectual property identification and verification submodule 3022 is configured to: when the information to be verified includes current intellectual property information of the enterprise, compare whether the current intellectual property information is consistent with pre-acquired target intellectual property information of the same type, when it is compared that the current intellectual property information is consistent with the target intellectual property information, determine that the verification of the current intellectual property information succeeds, and when it is compared that the current intellectual property information is inconsistent with the target intellectual property information, determine that the verification of the current intellectual property information fails.

The pre-acquired target intellectual property information of the same type may be acquired by linking the intellectual property identification and verification submodule 3022 to a corresponding third-party API. Optionally, the current intellectual property information of the enterprise includes one piece or a combination of more pieces of current applied patent information of the enterprise, current registered trademark information of the enterprise, current registered works copyright information of the enterprise and current registered software copyright information of the enterprise.

The authentication certificate identification and verification submodule 3023 is configured to: when the information to be verified includes authentication certificate information of the enterprise, acquire certificate information matched with the certificate type from the authentication certificate information of the enterprise according to a certificate type indicated by the authentication certificate information of the enterprise; when the certificate information includes a certificate state and the certificate state represents that a certificate of the enterprise is invalid, determine that the verification of the authentication certificate information of the enterprise fails; when the certificate information includes inherent certificate information and the inherent certification information is inconsistent with pre-acquired correct inherent certificate information, determine that the verification of the authentication certificate information of the enterprise fails; and when the certificate state included by the certificate information represents that the certificate of the enterprise is valid and the inherent certificate information included by the certificate information is consistent with the pre-acquired correct inherent certificate information, determine that the verification of the authentication certificate information of the enterprise succeeds.

The inherent certificate information includes at least one of a certificate number of the enterprise, an enterprise name of the enterprise and a unified social credit code of the enterprise.

The inspection report identification and verification submodule 3024 is configured to: when the information to be verified includes commodity inspection report information of the enterprise, compare whether the commodity inspection report information of the enterprise is consistent with pre-acquired correct inspection report information of the enterprise, wherein the pre-acquired correct inspection report information of the enterprise is acquired by the information generation platform through an API of a corresponding inspection institution or is queried on an official website of the corresponding inspection institution or is obtained by scanning a two-dimensional code included in the commodity inspection report information of the enterprise to access a website database of the corresponding inspection institution; when it is compared that the commodity inspection report information of the enterprise is consistent with pre-acquired correct inspection report information of the enterprise, determine that the verification of the commodity inspection report information of the enterprise succeeds; when it is compared that the commodity inspection report information of the enterprise is inconsistent with pre-acquired correct inspection report information of the enterprise, determine that the verification of the commodity inspection report information of the enterprise fails; or, send the commodity inspection report information of the enterprise to a determined inspection institution, and acquire a feedback result of the inspection institution; when the feedback result is empty or the feedback result represents that the commodity inspection report information of the enterprise is incorrect, determine that the verification of the commodity inspection report information of the enterprise fails; and when the feedback result represents that the commodity inspection report information of the enterprise is correct, determine that the verification of the commodity inspection report information of the enterprise succeeds.

If the inspection institution opens the API to the information generation platform, the information generation platform can directly use data in an inspection report of the inspection institution that has a matching number; and if the inspection institution for verifying the inspection report submitted by the enterprise does not have an API or does not open the API to the information generation platform, the inspection report information is verified in the following three ways:
(1) A rear terminal of the information generation platform emails the inspection report and an inspection report verification sheet to the inspection institution, and the inspection institution fills in the verification sheet in a reply email and determines, through the verification module or an "inspection report identification and verification submodule" included in the verification module, whether it is successful or failed. If it is successful, the verification succeeds, and a screenshot can be further saved. If it fails, the verification fails, and the information generation platform makes a prompt to prompt the enterprise to reenter the verification interface for resubmission.
(2) The rear terminal of the information generation platform performs query on the official website of the inspection institution by using related information such as the inspection report number provided by the enterprise. If the information is consistent, the verification succeeds, data of the inspection institution is used, and a screenshot can be further saved. If the information is inconsistent, the verification fails, and the information generation platform makes a prompt to prompt the enterprise to reenter the verification interface for resubmission.
(3) A two-dimensional code of the inspection report is scanned through the rear end of the information generation platform to access a web database of the inspection institution, and data in the inspection report of the inspection institution that has a matching number is used. If the information is consistent, the verification succeeds, data of the inspection institution is used, and a screenshot can be further saved. If the information is inconsistent, the verification fails, and the information generation platform makes a prompt to prompt the enterprise to reenter the verification interface for resubmission.

It can be seen that according to the apparatus described in Fig. 4, by means of Internet plus enterprise business information identification and verification plus intellectual property identification and verification plus authentication certificate identification and verification plus product inspection report verification sheet identification and verification plus benchmarking threshold and result evaluation plus check of the self-declaration letter of commitment of the enterprise/the verification entrust declaration contract/insurance information/payment state plus preview and confirm/download/seal/upload of one certificate and two sheets of the self-declaration of the enterprise plus generation of exclusive two-dimensional code announcements for one certificate and two sheets plus "benchmarking consumption" achieved by a PC and a mobile terminal, during transaction of a customer, the customer can scan the exclusive two-dimensional code carried on a commodity or product through a mobile phone and other user terminals to timely display one certificate and two sheets (the benchmarking consumption green statement certificate, the standard comparison letter of commitment, and the enterprise information AI verification sheet) on the user terminal, which is understandably and clearly disclosed to the consumer on the user terminal, reflecting the benchmarking quality level of the product and achieving the personal commitment of the enterprise. In this way, the customer can be provided with high quality and good price when the customer buys commodities or products. According to the data, it is beneficial for the consumers to choose good commodities from multiple commodities and select better commodities from the good commodities, which not only helps to establish a standardized product brand, but also strengthens the confidence of customers in products, thus improving the product competitiveness and also the protecting the rights and benefits of customers and product manufacturers as much as possible. In addition to the guarantee of the product insurance and manufacturers' self-commitments and self-declarations, the present invention also has four verifications for the admittance of the enterprise and an exclusive two-dimensional code for benchmarking threshold result evaluation, and strives to minimize the risk of purchased self-declaration products with good quality and high environmental friendliness.

### Embodiment IV

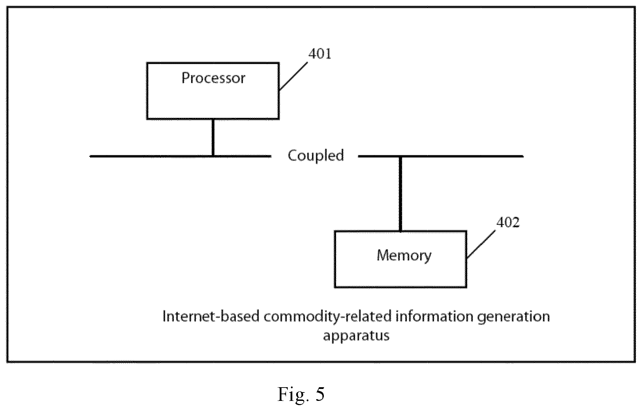

Please refer to Fig. 5, Fig. 5 is a schematic structural diagram of another Internet-based commodity-related information generation apparatus disclosed by an embodiment of the present invention. As shown in Fig. 5, the apparatus may be applied to an information generation platform, and the apparatus may include:
a memory 401 which stores executable program codes; and
a processor 402 which is coupled to the memory 401; wherein
the processor 402 calls the executable program codes stored in the memory 401 to execute the steps in the Internet-based commodity-related information generation method disclosed in Embodiment I or Embodiment II of the present invention.

### Embodiment V

An embodiment of the present invention discloses a computer storage medium. The computer storage medium stores computer instructions; and the computer instructions are used for, when called, executing the steps in the Internet-based commodity-related information generation method disclosed in Embodiment I or Embodiment II of the present invention.

The apparatus embodiments described above are only illustrative, and the modules described as separate components may or may not be physically separated, and the components displayed as modules may or may not be physical modules, that is, they may be located in one place, or may be distributed to multiple network modules. Some or all of the modules may be selected according to actual needs to achieve the objectives of the solutions of the embodiments. Those of ordinary skill in the art can understand and implement the objectives without creative work.

Through the specific descriptions of the above embodiments, those skilled in the art can clearly understand that all the implementations can be implemented by means of software and a necessary general hardware platform, and of course, can also be achieved by hardware. Based on this understanding, the above technical solution essentially or the part that contributes to the prior art can be embodied in the form of a software product. The computer software product can be stored in a computer-readable storage medium, and the storage medium includes a read-only memory (ROM), a random access memory (RAM), a programmable read-only memory (PROM), an erasable programmable read-only memory (EPROM), a one-time programmable read-only memory (OTPROM), an electronically-erasable programmable read-only memory (EEPROM), a compact disc read-only memory (CD-ROM), or other optical disk storages, magnetic disk storages, tape storages, or any other computer-readable mediums that can be used to carry or store data.

Finally, it should be noted that the Internet-based commodity-related information generation method and apparatus disclosed in the embodiments of the present invention are only the preferred embodiments of the present invention, and are only used to illustrate the technical solutions of the present invention, but not intended to limit the technical solutions. Although the resent invention has been described in detail with reference to the foregoing embodiments, those of ordinary skill in the art should understand that they can still modify the technical solutions described in all the foregoing embodiments, or equivalently replace some of the technical features; and these modifications or replacements do not cause the essence of the corresponding technical solution to deviate from the spirit and scope of the technical solutions of the various embodiments.

## Claims

1. An Internet-based commodity-related information generation method, wherein the method is applied to an information generation platform, and the method comprises:
acquiring, by the information generation platform, a verification request triggered by a certain enterprise, wherein the verification request comprises information to be verified corresponding to the enterprise, and the verification request is used for asking the information generation platform to verify the information to be verified; the enterprise is any enterprise that requires generation of commodity-related information or any enterprise that requires generation of commodity-related information and is registered in the information generation platform;
verifying, by the information generation platform, the information to be verified, when the verification of the information to be verified succeeds, acquiring target commodity commitment data corresponding to the enterprise, and acquiring target commodity inspection data corresponding to the enterprise; and
generating, by the information generation platform, commodity-related information matched with the enterprise according to the target commodity inspection data and the target commodity commitment data;
wherein the commodity-related information comprises an evaluation result corresponding to the enterprise, and/or, a code graph identification corresponding to the enterprise, and/or, one piece or a combination of more pieces of comparison certificate information of the enterprise, commitment information of the enterprise and verification information of the enterprise; the code graph identification corresponding to the enterprise is used for accessing one or a combination of more of the evaluation result corresponding to the enterprise, the comparison certificate information of the enterprise, the commitment information of the enterprise and the verification information of the enterprise.

2. The Internet-based commodity-related information generation method according to claim 1, wherein after the verification of the information to be verified succeeds, before the acquiring, by the information generation platform, target commodity commitment data corresponding to the enterprise, the method further comprises:
determining, by the information generation platform, whether a current inspection data corresponding to the enterprise satisfies a preset data condition;
when it is determined that the current inspection data satisfies the data condition, triggering and executing an operation of acquiring target commodity commitment data corresponding to the enterprise;
wherein the acquiring, by the information generation platform, target commodity commitment data corresponding to the enterprise comprises:
displaying, by the information generation platform, a target operation interface to the enterprise; and
collecting, by the information generation platform, the target commodity commitment data corresponding to the enterprise from the target operation interface.

3. The Internet-based commodity-related information generation method according to claim 2, wherein the determining, by the information generation platform, whether the current inspection data corresponding to the enterprise satisfies a preset data condition comprises:
determining, by the information generation platform, whether all pieces of inspection data or target inspection data in the current inspection data corresponding to the enterprise meet a preset first data standard; when a determination result is positive, determining that the current inspection data corresponding to the enterprise satisfies the preset data condition; or,
determining, by the information generation platform, whether all pieces of inspection data in the current inspection data corresponding to the enterprise meet a predetermined first data standard and whether number of pieces of target data, which are superior to the first data standard, among all pieces of target data of the current inspection data corresponding to the enterprise is greater than or equal to a preset number threshold; when a determination result is positive, determining that the current inspection data corresponding to the enterprise satisfies the preset data condition; or,
determining, by the information generation platform, whether the number of pieces of target data, which are superior to the predetermined first data standard, among all pieces of target data of the current inspection data corresponding to the enterprise is greater than or equal to the preset number threshold; when a determination result is positive, determining that the current inspection data corresponding to the enterprise satisfies the preset data condition;
wherein a fact that certain data is superior to the first data standard indicates that the data is superior to a preset multiple of data corresponding to the first data standard.

4. The Internet-based commodity-related information generation method according to claim 2, wherein the target operation interface is used for displaying a plurality of commodity categories for selection by the enterprise, a plurality of comparison items corresponding to each commodity category, at least one determined standard identification, a commodity inspection data identification and a commodity commitment data identification;
wherein before the collecting, by the information generation platform, target commodity commitment data corresponding to the enterprise from the target operation interface, the method further comprises:
detecting, by the information generation platform, a target commodity category selected by an operator from the target operation interface, and determining a target comparison item corresponding to the target commodity category;
acquiring, by the information generation platform, target commodity inspection data of the enterprise that is matched with the target commodity category and the target comparison item and target standard data that is matched with the target commodity category and the target comparison item and corresponds to the at least one standard identification; displaying the target commodity inspection data in a display region, corresponding to the commodity inspection data identification, in the target operation interface; displaying the target standard data corresponding to the at least one standard identification in a display region, corresponding to the standard identification, in the target operation interface; and
calculating, by the information generation platform according to the target commodity inspection data, a commodity commitment data set for selection by the enterprise, and displaying the commodity commitment data set in a display region, corresponding to the commodity commitment data identification, in the target operation interface according to a selection operation for the collected commitment data;
and the collecting, by the information generation platform, target commodity commitment data corresponding to the enterprise from the target operation interface comprises:
collecting, from the target operation interface by the information generation platform, one piece of commodity commitment data which is selected by the enterprise from the commodity commitment data set as target commodity commitment data corresponding to the enterprise.

5. The Internet-based commodity-related information generation method according to claim 4, wherein after the acquiring, by the information generation platform, target commodity inspection data of the enterprise that is matched with the target commodity category and the target comparison item and target standard data that is matched with the target commodity category and the target comparison item and corresponds to the at least one standard identification, the method further comprises:
generating, by the information generation platform, a matching data display graph according to a predetermined data display form, wherein the data display graph is used for displaying at least one of the target commodity inspection data, standard data corresponding to the at least one standard identification and the target commodity commitment data according to the data display form; and
displaying, by the information generation platform, the data display graph on the target operation interface.

6. The Internet-based commodity-related information generation method according to claim 5, wherein the data display graph is a test tube model graph, and the test tube model graph is used for displaying content as follows:
data scales and indication identifications on the data scales for indicating sizes of displayed data, and/or, the evaluation result corresponding to the enterprise;
wherein the evaluation result corresponding to the enterprise comprises a benchmarking evaluation result corresponding to the enterprise, and the benchmarking evaluation result corresponding to the enterprise represents a comparison result between the target commodity commitment data corresponding to the enterprise and the target standard data corresponding to the at least one standard identification.

7. The Internet-based commodity-related information generation method according to claim 6, wherein the method further comprises:
after generating the commodity-related information, or after generating the commodity-related information and determining that the commodity-related information satisfies a predetermined information condition, generating, by the information generation platform, target information that is required to be confirmed by the enterprise, and sending the target information to the enterprise for confirmation and feedback;
when feedback information from the enterprise aiming at the target information is received, verifying, by the information generation platform, the feedback information; and when the verification succeeds, generating link information of one or a combination of more of an evaluation result corresponding to the enterprise, comparison certificate information of the enterprise, commitment information of the enterprise and verification information of the enterprise, and sending the link information to the enterprise, wherein the link information is used for the enterprise to access and preview the related information.

8. The Internet-based commodity-related information generation method according to claim 7, wherein the target information comprises at least one of commitment statement information, verification entrust information and insurance underwriting information; the target comparison item is a positive comparison item or a negative comparison item;
wherein after the verification of the feedback information succeeds, the method further comprises:
calculating, by the information generation platform, a target fee to be paid by the enterprise for the enterprise to pay;
detecting, by the information generation platform, whether the target fee is paid successfully; when a detection result is positive, triggering and executing the operation of generating link information of one or a combination of more of an evaluation result corresponding to the enterprise, comparison certificate information of the enterprise, commitment information of the enterprise and verification information of the enterprise;
wherein after sending, by the information generation platform, the link information to the enterprise, the method further comprises:
receiving, by the information generation platform, confirm information from the enterprise aiming at related information previewed by means of the link information; and
determining, by the information generation platform, whether the confirm information satisfies the preset condition, and when a determination result is positive, publishing information indicating that the enterprise has confirmed the related information.

9. The Internet-based commodity-related information generation method according to any one of claims from 1 to 8, wherein the information to be verified comprises one piece of or combined information of at least two pieces of business-related information of the enterprise, current intellectual property information of the enterprise, commodity inspection report information of the enterprise and authentication certificate information of the enterprise;
wherein when the information to be verified comprises the combined information, a fact that the verification of the information to be verified by the information generation platform succeeds is specifically as follows:
verifications of all pieces of information of a target type comprised in the combined information all succeed; or,
number of all the pieces of information, succeeding in verification, in the combined information is greater than or equal to a preset first number threshold; or,
number of pieces of target information, succeeding in verification, in all the pieces of information of the target type comprised in the combined information is greater than or equal to a preset second number threshold.

10. The Internet-based commodity-related information generation method according to any one of claims from 1 to 8, wherein when the information to be verified comprises a business-related information of the enterprise, the verifying, by the information generation platform, the information to be verified comprises:
determining, by the information generation platform, a current enterprise state of the enterprise according to the business-related information of the enterprise;
when the current enterprise state represents that a current registration state of the enterprise is a non-existence state, represents that a running state of the enterprise is an abnormal running state or represents that a credit state of the enterprise is an illegal dishonest state, determining, by the information generation platform, that the verification of the business-related information fails; and
when the current enterprise state represents that a current registration state of the enterprise is an existence state, represents that a running state of the enterprise is a normal running state or represents that a credit state of the enterprise is an honest state, determining, by the information generation platform, that the verification of the business-related information succeeds.

11. The Internet-based commodity-related information generation method according to any one of claims from 1 to 8, wherein when the information to be verified comprises a current intellectual property information of the enterprise, the verifying, by the information generation platform, the information to be verified comprises:
comparing, by the information generation platform, whether the current intellectual property information is consistent with pre-acquired target intellectual property information of a same type;
when it is compared that the current intellectual property information is consistent with the target intellectual property information, determining, by the information generation platform, that the verification of the current intellectual property information succeeds; and
when it is compared that the current intellectual property information is inconsistent with the target intellectual property information, determining, by the information generation platform, that the verification of the current intellectual property information fails;
wherein the current intellectual property information of the enterprise comprises one piece or a combination of more pieces of current applied patent information of the enterprise, current registered trademark information of the enterprise, current registered works copyright information of the enterprise and current registered software copyright information of the enterprise.

12. The Internet-based commodity-related information generation method according to any one of claims from 1 to 8, wherein when the information to be verified comprises an authentication certificate information of the enterprise, the verifying, by the information generation platform, the information to be verified comprises:
acquiring, by the information generation platform, certificate information matched with a certificate type from the authentication certificate information of the enterprise according to a certificate type indicated by the authentication certificate information of the enterprise;
when the certificate information comprises a certificate state and the certificate state represents that a certificate of the enterprise is invalid, determining, by the information generation platform, that the verification of the authentication certificate information of the enterprise fails;
when the certificate information comprises inherent certificate information and the inherent certification information is inconsistent with pre-acquired correct inherent certificate information, determining, by the information generation platform, that the verification of the authentication certificate information of the enterprise fails; and
when the certificate state comprised by the certificate information represents that the certificate of the enterprise is valid and the inherent certificate information comprised by the certificate information is consistent with the pre-acquired correct inherent certificate information, determining, by the information generation platform, that the verification of the authentication certificate information of the enterprise succeeds;
wherein the inherent certificate information comprises at least one of a certificate number of the enterprise, an enterprise name of the enterprise and a unified social credit code of the enterprise.

13. The Internet-based commodity-related information generation method according to any one of claims from 1 to 8, wherein when the information to be verified comprises a commodity inspection report information of the enterprise, the verifying, by the information generation platform, the information to be verified comprises:
comparing, by the information generation platform, whether the commodity inspection report information of the enterprise is consistent with pre-acquired correct inspection report information of the enterprise, wherein the pre-acquired correct inspection report information of the enterprise is acquired by the information generation platform through an Application Programming Interface (API) of a corresponding inspection institution or is queried on an official website of the corresponding inspection institution or is obtained by scanning a two-dimensional code comprised in the commodity inspection report information of the enterprise to access a website database of the corresponding inspection institution;
when it is compared that the commodity inspection report information of the enterprise is consistent with the pre-acquired correct inspection report information of the enterprise, determining, by the information generation platform, that the verification of the commodity inspection report information of the enterprise succeeds;
when it is compared that the commodity inspection report information of the enterprise is inconsistent with the pre-acquired correct inspection report information of the enterprise, determining, by the information generation platform, that the verification of the commodity inspection report information of the enterprise fails; or,
sending, by the information generation platform, the commodity inspection report information of the enterprise to a determined inspection institution, and acquiring a feedback result of the inspection institution; when the feedback result is empty or the feedback result represents that the commodity inspection report information of the enterprise is incorrect, determining that the verification of the commodity inspection report information of the enterprise fails; and when the feedback result represents that the commodity inspection report information of the enterprise is correct, determining that the verification of the commodity inspection report information of the enterprise succeeds.

14. An Internet-based commodity-related information generation apparatus, wherein the apparatus is applied to an information generation platform, and the apparatus comprises:
a first acquisition module, configured to acquire a verification request triggered by a certain enterprise, wherein the verification request comprises information to be verified corresponding to the enterprise, and the verification request is used for asking the information generation platform to verify the information to be verified; the enterprise is any enterprise that requires generation of commodity-related information or any enterprise that requires generation of commodity-related information and is registered in the information generation platform;
a verification module, configured to verify the information to be verified;
a second acquisition module, configured to acquire target commodity commitment data corresponding to the enterprise when the verification of the information to be verified by the verification module succeeds;
a third acquisition module, configured to acquire target commodity inspection data corresponding to the enterprise when the verification of the information to be verified by the verification module succeeds; and
an information generation module, configured to generate commodity-related information matched with the enterprise according to the target commodity inspection data and the target commodity commitment data;
wherein the commodity-related information comprises an evaluation result corresponding to the enterprise, and/or, a code graph identification corresponding to the enterprise, and/or, one piece or a combination of more pieces of comparison certificate information of the enterprise, commitment information of the enterprise and verification information of the enterprise; and the code graph identification corresponding to the enterprise is used for accessing one or a combination of more of the evaluation result corresponding to the enterprise, the comparison certificate information of the enterprise, the commitment information of the enterprise and the verification information of the enterprise.

15. The Internet-based commodity-related information generation apparatus according to claim 14, wherein the apparatus further comprises:
a determination module, configured to: after the verification of the information to be verified by verification module succeeds, determine whether a current inspection data corresponding to the enterprise satisfies a preset data condition; and when it is determined that the current inspection data satisfies the data condition, trigger the second acquisition module to execute an operation of acquiring target commodity commitment data corresponding to the enterprise;
wherein the second acquisition module comprises:
a display submodule, configured to display a target operation interface to the enterprise when the determination module determines that the current inspection data satisfies the data condition; and
a collection submodule, configured to collect the target commodity commitment data corresponding to the enterprise from the target operation interface.

16. The Internet-based commodity-related information generation apparatus according to claim 15, wherein a specific mode of the determination module for determining whether the current inspection data corresponding to the enterprise satisfies the preset data condition is:
determining whether all pieces of inspection data or target inspection data in the current inspection data corresponding to the enterprise meet a preset first data standard; when a determination result is positive, determining that the current inspection data corresponding to the enterprise satisfies the preset data condition; or,
determining whether all pieces of inspection data in the current inspection data corresponding to the enterprise meet a predetermined first data standard and whether number of pieces of target data, which are superior to the first data standard, among all pieces of target data of the current inspection data corresponding to the enterprise is greater than or equal to a preset number threshold; when a determination result is positive, determining that the current inspection data corresponding to the enterprise satisfies the preset data condition; or,
determining whether the number of pieces of target data, which are superior to a predetermined first data standard, among all pieces of target data of the current inspection data corresponding to the enterprise is greater than or equal to the preset number threshold; when a determination result is positive, determining that the current inspection data corresponding to the enterprise satisfies the preset data condition;
wherein a fact that certain data is superior to the first data standard indicates that the data is superior to a preset multiple of data corresponding to the first data standard.

17. The Internet-based commodity-related information generation apparatus according to claim 15, wherein the target operation interface is used for displaying a plurality of commodity categories for selection by the enterprise, a plurality of comparison items corresponding to each commodity category, at least one determined standard identification, a commodity inspection data identification and a commodity commitment data identification;
wherein the second acquisition module further comprises:
a detection submodule, configured to: before the collection submodule collects the target commodity commitment data corresponding to the enterprise from the target operation interface, detect a target commodity category selected by an operator from the target operation interface, and determine a target comparison item corresponding to the target commodity category; and
an acquisition submodule, configured to acquire target commodity inspection data of the enterprise that is matched with the target commodity category and the target comparison item and target standard data that is matched with the target commodity category and the target comparison item and corresponds to the at least one standard identification;
the display submodule, further configured to display the target commodity inspection data in a display region, corresponding to the commodity inspection data identification, in the target operation interface, and display the target standard data corresponding to the at least one standard identification in a display region, corresponding to the standard identification, in the target operation interface; and
a calculation submodule, configured to calculate, according to the target commodity inspection data, a commodity commitment data set for selection by the enterprise; wherein
the display submodule is further configured to display the commodity commitment data set in a display region, corresponding to the commodity commitment data identification, in the target operation interface according to a selection operation for the collected commitment data; and
a specific mode of the collection submodule for collecting the target commodity commitment data corresponding to the enterprise from the target operation interface is:
collecting, from the target operation interface, one piece of commodity commitment data which is selected by the enterprise from the commodity commitment data set as target commodity commitment data corresponding to the enterprise.

18. The Internet-based commodity-related information generation apparatus according to claim 17, wherein the second acquisition module further comprises:
a generation submodule, configured to: after the acquisition submodule acquires target commodity inspection data of the enterprise that is matched with the target commodity category and the target comparison item and target standard data that is matched with the target commodity category and the target comparison item and corresponds to the at least one standard identification, generate a matching data display graph according to a predetermined data display form, wherein the data display graph is used for displaying at least one of the target commodity inspection data, standard data corresponding to the at least one standard identification and the target commodity commitment data according to the data display form; and
the display submodule is further configured to display the data display graph on the target operation interface.

19. The Internet-based commodity-related information generation apparatus according to claim 18, wherein the data display graph is a test tube model graph, and the test tube model graph is used for displaying content as follows:
data scales and indication identifications on the data scales for indicating sizes of displayed data, and/or, the evaluation result corresponding to the enterprise;
wherein the evaluation result corresponding to the enterprise comprises a benchmarking evaluation result corresponding to the enterprise, and the benchmarking evaluation result corresponding to the enterprise represents a comparison result between the target commodity commitment data corresponding to the enterprise and the target standard data corresponding to the at least one standard identification.

20. The Internet-based commodity-related information generation apparatus according to claim 19, wherein the information generation module is further configured to: after generating the commodity-related information, or after generating the commodity-related information and determining that the commodity-related information satisfies a predetermined information condition, generate target information that is required to be confirmed by the enterprise, and send the target information to the enterprise for confirmation and feedback;
wherein the apparatus further comprises:
a verification module, configured to verify the feedback information when feedback information from the enterprise aiming at the target information is received;
the information generation module, further configured to: when the verification succeeds, generate link information of one or a combination of more of an evaluation result corresponding to the enterprise, comparison certificate information of the enterprise, commitment information of the enterprise and verification information of the enterprise; and
a communication module, configured to send the link information to the enterprise, wherein the link information is used for the enterprise to access and preview the related information.

21. The Internet-based commodity-related information generation apparatus according to claim 20, wherein the target information comprises at least one of commitment statement information, verification entrust information and insurance underwriting information; the target comparison item is a positive comparison item or a negative comparison item;
wherein the apparatus further comprises:
a calculation module, configured to calculate a target fee to be paid by the enterprise for the enterprise to pay after the verification of the feedback information by the verification module succeeds;
a detection module, configured to detect whether the target fee is paid successfully; when a detection result is positive, trigger the information generation module to execute the operation of generating link information of one or a combination of more of an evaluation result corresponding to the enterprise, comparison certificate information of the enterprise, commitment information of the enterprise and verification information of the enterprise;
the communication module, further configured to receive confirm information from the enterprise aiming at related information previewed by means of the link information after sending the link information to the enterprise;
the determination module, further configured to determine whether the confirm information satisfies the preset condition; and
a publishing module, configured to publish information indicating that the enterprise has confirmed the related information when the determination module determines that the confirm information satisfies the preset condition.

22. The Internet-based commodity-related information generation apparatus according to claim 21, wherein the information to be verified comprises one piece of or combined information of at least two pieces of business-related information of the enterprise, current intellectual property information of the enterprise, commodity inspection report information of the enterprise and authentication certificate information of the enterprise;
wherein when the information to be verified comprises the combined information, a fact that the verification of the information to be verified by the verification module succeeds is specifically as follows:
verifications of all pieces of information of a target type comprised in the combined information all succeed; or,
number of all the pieces of information, succeeding in verification, in the combined information is greater than or equal to a preset first number threshold; or,
number of pieces of target information, succeeding in verification, in all the pieces of information of the target type comprised in the combined information is greater than or equal to a preset second number threshold.

23. The Internet-based commodity-related information generation apparatus according to any one of claims from 14 to 22, wherein the verification module comprises a business information identification and verification submodule, wherein
the business information identification and verification submodule is configured to: when the information to be verified comprises business-related information of the enterprise, determine a current enterprise state of the enterprise according to the business-related information of the enterprise; when the current enterprise state represents that a current registration state of the enterprise is a non-existence state, represents that a running state of the enterprise is an abnormal running state or represents that a credit state of the enterprise is an illegal dishonest state, determine that the verification of the business-related information fails; when the current enterprise state represents that a current registration state of the enterprise is an existence state, represents that a running state of the enterprise is a normal running state or represents that a credit state of the enterprise is a honest state, determine that the verification of the business-related information succeeds.

24. The Internet-based commodity-related information generation apparatus according to any one of claims from 14 to 22, wherein the verification module comprises an intellectual property identification and verification submodule, wherein
the intellectual property identification and verification submodule is configured to: when the information to be verified comprises current intellectual property information of the enterprise, compare whether the current intellectual property information is consistent with pre-acquired target intellectual property information of a same type; when it is compared that the current intellectual property information is consistent with the target intellectual property information, determine that the verification of the current intellectual property information succeeds; when it is compared that the current intellectual property information is inconsistent with the target intellectual property information, determine that the verification of the current intellectual property information fails;
wherein the current intellectual property information of the enterprise comprises one piece or a combination of more pieces of current applied patent information of the enterprise, current registered trademark information of the enterprise, current registered works copyright information of the enterprise and current registered software copyright information of the enterprise.

25. The Internet-based commodity-related information generation apparatus according to any one of claims from 14 to 22, wherein the verification module comprises an authentication certificate identification and verification submodule, wherein
the authentication certificate identification and verification submodule is configured to: when the information to be verified comprises authentication certificate information of the enterprise, acquire certificate information matched with a certificate type from the authentication certificate information of the enterprise according to a certificate type indicated by the authentication certificate information of the enterprise; when the certificate information comprises a certificate state and the certificate state represents that a certificate of the enterprise is invalid, determine, by the information generation platform, that the verification of the authentication certificate information of the enterprise fails; when the certificate information comprises inherent certificate information and the inherent certification information is inconsistent with pre-acquired correct inherent certificate information, determine that the verification of the authentication certificate information of the enterprise fails; and when the certificate state comprised by the certificate information represents that the certificate of the enterprise is valid and the inherent certificate information comprised by the certificate information is consistent with the pre-acquired correct inherent certificate information, determine that the verification of the authentication certificate information of the enterprise succeeds;
wherein the inherent certificate information comprises at least one of a certificate number of the enterprise, an enterprise name of the enterprise and a unified social credit code of the enterprise.

26. The Internet-based commodity-related information generation apparatus according to any one of claims from 14 to 22, wherein the verification module comprises an inspection report identification and verification submodule, wherein
the inspection report identification and verification submodule is configured to: when the information to be verified comprises commodity inspection report information of the enterprise, compare whether the commodity inspection report information of the enterprise is consistent with pre-acquired correct inspection report information of the enterprise, wherein the pre-acquired correct inspection report information of the enterprise is acquired by the information generation platform through an Application Programming Interface (API) of a corresponding inspection institution or is queried on an official website of the corresponding inspection institution or is obtained by scanning a two-dimensional code comprised in the commodity inspection report information of the enterprise to access a website database of the corresponding inspection institution; when it is compared that the commodity inspection report information of the enterprise is consistent with pre-acquired correct inspection report information of the enterprise, determine, by the information generation platform, that the verification of the commodity inspection report information of the enterprise succeeds; when it is compared that the commodity inspection report information of the enterprise is inconsistent with pre-acquired correct inspection report information of the enterprise, determine, by the information generation platform, that the verification of the commodity inspection report information of the enterprise fails; or, send the commodity inspection report information of the enterprise to a determined inspection institution, and acquire a feedback result of the inspection institution; when the feedback result is empty or the feedback result represents that the commodity inspection report information of the enterprise is incorrect, determine that the verification of the commodity inspection report information of the enterprise fails; and when the feedback result represents that the commodity inspection report information of the enterprise is correct, determine that the verification of the commodity inspection report information of the enterprise succeeds.
